# EUROPEAN PATENT APPLICATION

(11) **EP 2 555 513 A1**
(43) Date of publication of application: **06.02.2013**
(21) Application number: 11762574.9
(22) Date of filing: 15.03.2011
(51) Int. Cl.: H04N 7/173, H04H 20/61, H04H 60/13, H04H 60/42, H04H 60/82, H04N 5/44, H04N 5/445

(54) **RECEPTION DEVICE FOR DIGITAL SIGNAL INCLUDING STATION-SELECTION AUXILIARY INFORMATION, AND RECEPTION METHOD, SENDING DEVICE, SENDING METHOD, AND PROGRAM**

(30) Priority: 30.03.2010 JP 2010079182
(71) Applicant: Sony Corporation, Tokyo 108-0075 (JP)
(72) Inventor: KITAZATO Naohisa, Tokyo 108-0075 (JP); HATAKEYAMA Izumi, Tokyo 108-0075 (JP); OBAYASHI Masayuki, Tokyo 108-0075 (JP)
(74) Representative: Turner, James Arthur
(86) International application number: PCT/JP2011/056106
(87) International publication number: WO 2011/122334

(57) **Abstract**

The present invention relates to a reception device, a reception method, a transmission device and a transmission method for a digital signal including tuning assistant information capable of rapidly presenting one segment broadcasting which can be received, and a program.

Station information acquisition units 111 to 113 acquire station information regarding a station, at least including broadcasting area information which is information of a broadcasting area capable of receiving a broadcast wave from the station which transmits the broadcast wave of arbitrary one segment broadcasting at an arbitrary segment. A station selection unit 117 selects a station of the one segment broadcasting which can be received at a predetermined position as a tunable station which can be tuned using the broadcasting area information, and a tuning control unit 118 performs tuning control in which the one segment broadcasting of the tunable station is tuned. The present invention may be applied to, for example, a portable reception terminal or the like of one seg broadcasting.

## Description

### TECHNICAL FIELD

The present invention relates to a reception device, a reception method, a transmission device, a transmission method, and a program, and particularly to a reception device, a reception method, a transmission device, a transmission method, and a program, capable of rapidly presenting one segment broadcasting which can be received.

### BACKGROUND ART

In digital terrestrial broadcasting, a frequency band (hereinafter, referred to as a physical channel) of about 6 MHz of a UHF (Ultra High Frequency) band is divided into thirteen segments, and, broadcasting for fixed terminals such as television receivers is performed using twelve of the segments. In addition, broadcasting for portable terminals, that is, one segment broadcasting (hereinafter, also referred to as one seg broadcasting) is performed using the remaining one segment.

At present, in the one seg broadcasting which is performed as broadcasting for portable terminals, the same contents as in the broadcasting for fixed terminals are broadcasted, and thus a segment in the center (the seventh segment in an ascending order of the frequency) of the thirteen segments of the physical channel is used.

Here, one seg broadcasting which is performed using the segment in the center (hereinafter, referred to as, a central segment), which is currently performed, is also referred to as normal one seg broadcasting.

After there is a complete transfer from analog terrestrial broadcasting to digital terrestrial broadcasting, the digital terrestrial broadcasting is performed using physical channels called channels 13 to 52 of a UHF band.

However, all of the channels 13 to 52 are not actually used in each area in the digital terrestrial broadcasting, and thus vacant channels which are physical channels and are not used in the digital terrestrial broadcasting are generated.

Currently, methods for effectively using the vacant channels are examined, and, as one of them, it is examined that one seg broadcasting is performed using any segment of the vacant channel.

Here, a physical channel of the digital terrestrial broadcasting has thirteen segments, and thus it is possible to perform thirteen items of one seg broadcasting at maximum using a single physical channel. A plurality of items of one seg broadcasting performed using a plurality of respective segments of the thirteen segments of a physical channel is called multi-segment broadcasting.

In addition, one seg broadcasting performed using each of one or more arbitrary segments of the thirteen segments is also referred to as arbitrary one seg broadcasting, and the arbitrary one seg broadcasting is assumed to include multi-segment broadcasting.

In a reception terminal in the related art (hereinafter, also referred to as a normal one seg terminal) which receives one seg broadcasting, in order for a user to tune normal one seg broadcasting, a table (hereinafter, also referred to as a tuning table) of tuning information is created through channel scanning for acquiring tuning information which is information regarding tuning such as a frequency (for example, refer to Patent Document 1 or 2).

In the channel scanning of the normal one seg terminal, in a case where a central segment of each physical channel of the digital terrestrial broadcasting is tuned (tuned), and, a TS (Transport Stream) can be received at the central segment, an NIT (Network Information Table) which is a table including frequency information for each service for tuning a carrier where the service is transmitted and information regarding a corresponding service, and an SDT (Service Description Table) which is a table including meta-information of each service (service name) are extracted from the TS, and a tuning table is created from the NIT and the SDT.

In a case where a reception terminal receiving arbitrary one seg broadcasting is realized as well, a tuning table is required to be created in the same manner as in the normal one seg terminal.

However, since the arbitrary one seg broadcasting is performed using any segment of the thirteen segments of the physical channel, simply, not only the central segment of the physical channel but also all the thirteen segments thereof are required to be tuned in the channel scanning, and thus an enormous amount of time is needed as compared with channel scanning of the normal one seg terminal.

For this reason, there is a demand for a proposal of a method of rapidly performing channel scanning of arbitrary one seg broadcasting in a short time.

### CITATION LIST

### PATENT DOCUMENTS

Patent Document 1: Japanese Patent Application Laid-Open No. 2006-325032
Patent Document 2: Japanese Patent Application Laid-Open No. 2007-329847

### SUMMARY OF THE INVENTION

### PROBLEMS TO BE SOLVED BY THE INVENTION

However, arbitrary one seg broadcasting (hereinafter, also referred to as area limited broadcasting) has been proposed in which an area of approximately several tens of m to several km with respect to (an antenna of) a station which is a transmission device transmitting a broadcast wave of the arbitrary one seg broadcasting is set as a broadcasting area.

Since the area limited broadcasting is included in a category of the arbitrary one seg broadcasting, a tuning table is also required to be created in a reception terminal receiving the area limited broadcasting in the same manner as a case of receiving the arbitrary one seg broadcasting, but, since a broadcasting area is narrow in the area limited broadcasting, mere movement is performed by approximately several tens of m to several km, and thereby broadcasting which has been received hitherto cannot be received, and new broadcasting can be received. Therefore, there are cases where a tuning table created before movement cannot be used after the movement.

In other words, if broadcasting which is currently desired to be tuned by a user operating a so-called channel button is a logical channel, there are cases where, in a reception terminal receiving area limited broadcasting, the logical channel which is area limited broadcasting capable of being received before movement is presented after movement on the basis of a tuning table created before movement, and the logical channel cannot be received even if the user performs an operation so as to receive the logical channel.

Therefore, in order to present a logical channel capable of being received after movement to the user, it is necessary to perform channel scanning again after movement.

However, performing channel scanning for each movement takes time for presenting a logical channel capable of being received to the user.

The present invention has been made in consideration of these circumstances, and is to rapidly present one segment broadcasting capable of being received.

### SOLUTIONS TO PROBLEMS

A reception device or a program according to a first aspect of the present invention is a reception device for one segment broadcasting, including: station information acquisition means for acquiring station information regarding a station, the station information at least including broadcasting area information which is information of a broadcasting area capable of receiving a broadcast wave from the station which transmits the broadcast wave of the one segment broadcasting at an arbitrary segment; storage means for storing the station information; station selection means for selecting a station of the one segment broadcasting which can be received at a predetermined position as a tunable station which can be tuned using the broadcasting area information; and tuning control means for performing tuning control in which the one segment broadcasting of the tunable station is tuned, or a program for causing a computer to function as the reception device.

A reception method according to the first aspect of the present invention is a reception method for a reception device of one segment broadcasting, including the steps of: acquiring station information regarding a station, the station information at least including broadcasting area information which is information of a broadcasting area capable of receiving a broadcast wave from the station which transmits the broadcast wave of the one segment broadcasting at an arbitrary segment; storing the station information; selecting a station of the one segment broadcasting which can be received at a predetermined position as a tunable station which can be tuned using the broadcasting area information; and performing tuning control in which the one segment broadcasting of the tunable station is tuned.

In the above-described first aspect, station information regarding a station is acquired, which at least includes broadcasting area information which is information of a broadcasting area capable of receiving a broadcast wave from the station which transmits the broadcast wave of the one segment broadcasting at an arbitrary segment, and the station information is stored. In addition, a station of the one segment broadcasting which can be received at a predetermined position is selected as a tunable station which can be tuned using the broadcasting area information, and tuning control is performed in which the one segment broadcasting of the tunable station is tuned.

A transmission device or a program according to a second aspect of the present invention is a transmission device which is a station, including: station information acquisition means for acquiring station information regarding a station, the station information at least including broadcasting area information which is information of a broadcasting area capable of receiving a broadcast wave from the station which transmits the broadcast wave of the one segment broadcasting at each of one or more arbitrary segments; and transmission means for transmitting the station information of the station with a representative segment which is one segment of the one or more segments used for one segment broadcasting by the station, or a program for causing a computer to function as the transmission device.

A transmission method according to the second aspect of the present invention is a transmission method of a transmission device, which is a station for transmitting a broadcast wave of one segment broadcasting at each of one or more arbitrary segments, including the steps of: acquiring station information regarding the station, the station information at least including broadcasting area information which is information of a broadcasting area capable of receiving the broadcast wave from the station; and transmitting the station information of the station with a representative segment which is one segment of the one or more segments used for one segment broadcasting by the station.

In the above-described second aspect, station information regarding a station is acquired, which at least includes broadcasting area information which is information of a broadcasting area capable of receiving a broadcast wave from the station which transmits the broadcast wave of the one segment broadcasting at each of one or more arbitrary segments, and the station information of the station is transmitted with a representative segment which is one segment of the one or more segments used for one segment broadcasting by the station.

In addition, the reception device or the transmission device may be an independent device, or may be an internal block forming a single device.

In addition, the program may be transmitted via a transmission medium or be recorded on a recording medium so as to be provided.

### EFFECTS OF THE INVENTION

According to the first and second aspects of the present invention, it is possible to rapidly present one segment broadcasting which can be received.

### BRIEF DESCRIPTION OF DRAWINGS

Fig. 1 is a flowchart illustrating a tuning table creation process.
Fig. 2 is a diagram illustrating an example of the tuning table.
Fig. 3 is a diagram illustrating channel scanning of a normal one seg terminal.
Fig. 4 is a diagram illustrating a configuration example of one embodiment of a transmission and reception system to which the present invention is applied.
Fig. 5 is a diagram illustrating bandwidth assignment of digital terrestrial broadcasting.
Fig. 6 is a diagram illustrating an example of the segment assignment used for arbitrary one seg broadcasting.
Fig. 7 is a diagram illustrating a method of acquiring tuning information of area limited broadcasting.
Fig. 8 is a diagram illustrating an NIT transmitted using a central segment of a physical channel for area limited broadcasting.
Fig. 9 is a diagram illustrating configurations of an NIT and an SDT of a central segment and non-central segments.
Fig. 10 is a diagram illustrating channel scanning of each of a reception terminal 33 and a normal one seg terminal 100.
Fig. 11 is a diagram illustrating an example of the tuning table.
Fig. 12 is a diagram illustrating broadcasting areas of normal one seg broadcasting and lines of flow which are trajectories of a user carrying the normal one seg terminal 100 receiving only normal one seg broadcasting.
Fig. 13 is a diagram illustrating broadcasting areas of area limited broadcasting and lines of flow which are trajectories of a user carrying the reception terminal 33 which can receive area limited broadcasting.
Fig. 14 is a diagram illustrating an example of the station information.
Fig. 15 is a diagram illustrating an example of the syntax of the station information.
Fig. 16 is a diagram illustrating an acquisition method where the reception terminal 33 acquires station information.
Fig. 17 is a diagram illustrating a data structure of the NIT.
Fig. 18 is a diagram illustrating a method where station information STi is transmitted by a station 32.
Fig. 19 is a block diagram illustrating a detailed configuration example of the station 32.
Fig. 20 is a flowchart illustrating a transmission process performed by the station 32.
Fig. 21 is a block diagram illustrating a detailed configuration example of the reception terminal 33.
Fig. 22 is a diagram illustrating acquisition and use of station information in the reception terminal 33.
Fig. 23 is a block diagram illustrating a functional configuration example of a portion of the controller 80 which performs tuning control using station information.
Fig. 24 is a flowchart illustrating a process where the reception terminal 33 acquires station information through channel scanning and receives a service.
Fig. 25 is a diagram illustrating a display example of the display unit 76 in a case where the reception terminal 33 acquires station information through channel scanning and receives a service.
Fig. 26 is a flowchart illustrating a process where the reception terminal 33 acquires station information using a direct method and receives a service.
Fig. 27 is a flowchart illustrating a process where the reception terminal 33 acquires station information using other methods.
Fig. 28 is a flowchart illustrating a tuning process in an individual selection mode.
Fig. 29 is a diagram illustrating a display example of the display unit 76 in a case where the tuning process in an individual selection mode is performed.
Fig. 30 is a flowchart illustrating a tuning process in a sequential selection mode.
Fig. 31 is a diagram illustrating a display example of the display unit 76 in a case where the tuning process in a sequential selection mode is performed.
Fig. 32 is a flowchart illustrating a tuning process in a map display mode.
Fig. 33 is a diagram illustrating a display example of the display unit 76 in a case where the tuning process in a map display mode is performed.
Fig. 34 is a flowchart illustrating a tuning process in a GPS mode.
Fig. 35 is a block diagram illustrating a hardware configuration example of the computer.

### MODE FOR CARRYING OUT THE INVENTION

[Channel scanning of normal one seg terminal]

First, a description will be made of channel scanning of a normal one seg terminal which is a reception terminal in the related art receiving normal one seg broadcasting.

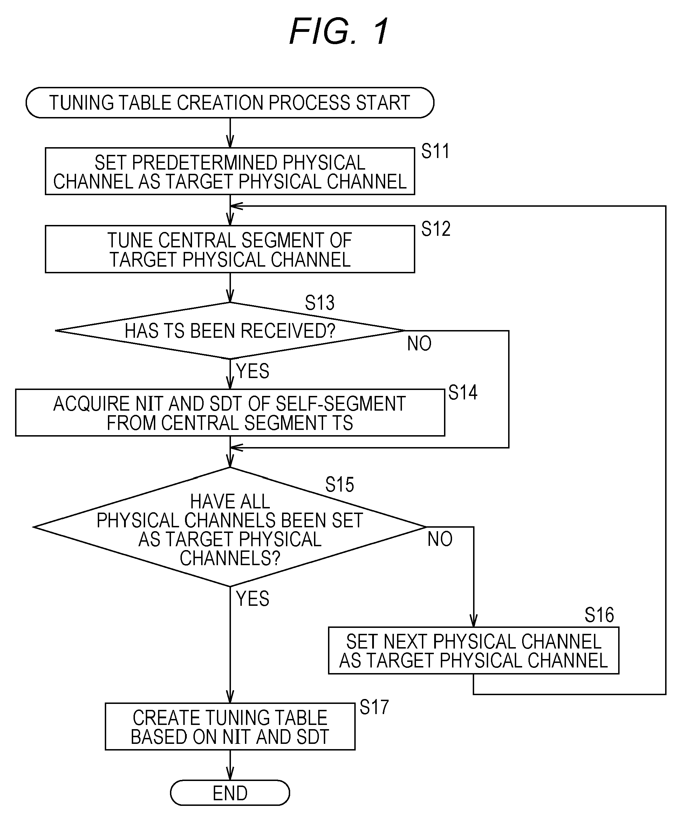

Fig. 1 is a flowchart illustrating channel scanning of the normal one seg terminal.

In step S11, the normal one seg terminal selects a physical channel of physical channels of channels 13 to 52 of a UHF band, for example, a physical channel of the lowest frequency as a target physical channel which is a process target, and the process proceeds to step S12.

In step S12, the normal one seg terminal tunes a central segment of the target physical channel, and proceeds to step S13.

In step S13, the normal one seg terminal determines whether or not a TS of the central segment of the target physical channel can be received, and if it is determined that it cannot be received, the process skips step S14, and proceeds to step S15.

In addition, if it is determined that the TS of the central segment of the target physical channel is received in step S13, the process proceeds to step S14 where the normal one seg terminal acquires (extracts) an NIT (Network Information Table) of a self-segment (a segment receiving the TS) which is described as NIT actual and an SDT (Service Description Table) of the self-segment which is described as SDT actual from the TS received using the central segment, and the process proceeds to step S15.

In step S15, the normal one seg terminal determines whether or not all the physical channels of the channels 13 to 52 of the UHF band have been target physical channels.

If it is determined that there is a physical channel which is not a target physical channel in step S15, the process proceeds to step S16 where the normal one seg terminal selects, for example, a physical channel of which a frequency is high next to the current target physical channel as a new target physical channel, and the process returns to step S12.

On the other hand, if it is determined that all the physical channels have been target physical channels in step S15, the process proceeds to step S17 where the normal one seg terminal creates a tuning table on the basis of the NIT and the SDT acquired in step S14 and finishes the channel scanning.

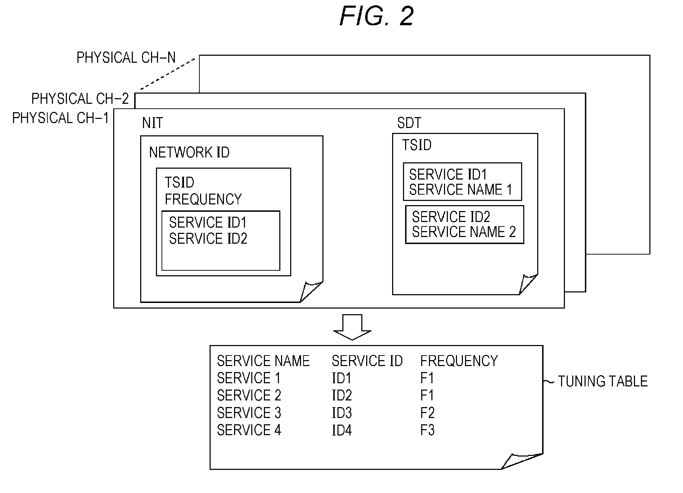

Fig. 2 is a diagram illustrating a tuning table created based on the NIT and the SDT.

In the NIT, a network ID which is an ID unique to a network, a TSID which is an ID unique to a TS, a frequency, a service ID unique to a (broadcasting) service, and the like, corresponding to a self-segment, are described. In addition, in the SDT, a TSID, a service ID, a service name corresponding to the service ID, and the like, corresponding to the self-segment, are described.

The normal one seg terminal acquires a service ID and a frequency for tuning from an NIT of a central segment of each physical channel, acquires a service name from an SDT corresponding to the NIT so as to be correlated, and registers the service ID, the service name, and the frequency in a tuning table as tuning information.

In addition, in Fig. 2, the central segment of the physical channel CH-1 of which a frequency F1 is used for two services of which the service IDs are ID1 and ID2, and thus two services ID1 and ID2 are described in the NIT of the central segment of the physical channel CH-1 of which a frequency is F1.

In the normal one seg terminal, for example, a service name of the tuning table is presented as the name of ("OO TV", "xx channel", or the like of a program table) a logical channel, and, if a user performs an operation so as to tune a service (logical channel) of the service name, a frequency correlated with the service name in the tuning table is tuned.

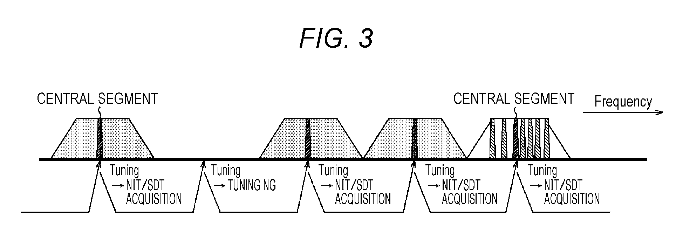

Fig. 3 is a diagram illustrating channel scanning of the normal one seg terminal.

As described with reference to Fig. 1, the normal one seg terminal tunes the central segments of the respective physical channels of the digital terrestrial broadcasting in the descending order of the frequency, and acquires an NIT and an SDT from a TS in a case where the TS can be received in the central segments.

In addition, the normal one seg terminal creates a tuning table from the NIT and the SDT acquired from the TS in the above-described way.

Therefore, in a case where arbitrary one seg broadcasting is performed using a central segment, tuning information of the one seg broadcasting can be acquired in the normal one seg terminal, but tuning information of arbitrary one seg broadcasting performed using segments (portions indicated by the diagonal lines in Fig. 3) other than the central segment cannot be acquired.

[Configuration example of one embodiment of transmission and reception system to which the present invention is applied]

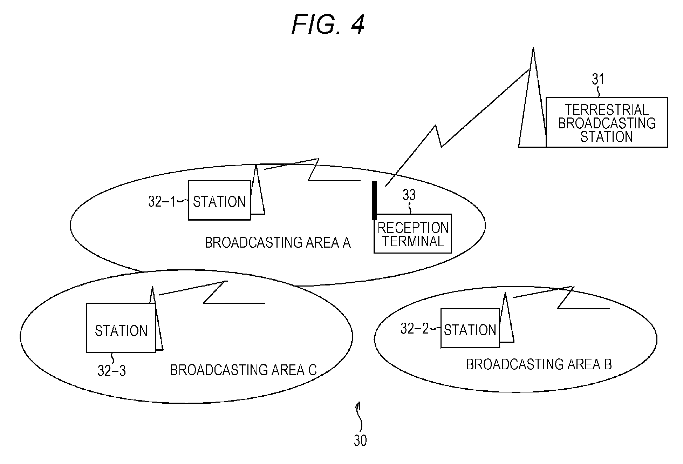

Fig. 4 is a diagram illustrating a configuration example of one embodiment of a transmission and reception system to which the present invention is applied.

In Fig. 4, the transmission and reception system 30 is constituted by a terrestrial broadcasting station 31, stations 32-1, 32-2 and 32-3, and a reception terminal 33.

The terrestrial broadcasting station 31 is a broadcasting station which performs digital terrestrial broadcasting, performs broadcasting for fixed terminals using twelve segments, and performs broadcasting (normal one seg broadcasting) for portable terminals using one segment.

The stations 32-1 to 32-3 are transmission devices which transmit broadcast waves of arbitrary one seg broadcasting, and perform area limited broadcasting which is one seg broadcasting using each of one or more arbitrary segments of a vacant channel of the digital terrestrial broadcasting.

In other words, the station 32-1 performs area limited broadcasting which can be received only in a broadcasting area A.

The station 32-2 performs area limited broadcasting which can be received only in a broadcasting area B, and the station 32-3 performs area limited broadcasting which can be received only in a broadcasting area C.

In addition, in a case where it is unnecessary to differentiate the stations 32-1 to 32-3 from each other, they are collectively referred to as a station 32.

Here, as the area limited broadcasting, for example, there is broadcasting regarding a theme park which can be received only in the theme park, broadcasting regarding shops which can be received only in a certain ward or town and is developed in the ward or town, or the like.

In the area limited broadcasting, broadcasting can be performed using the same segment in stations of broadcasting areas that do not overlap each other.

That is to say, for example, in Fig. 4, the broadcasting areas A and B do not overlap each other, and thus the station 32-1 of the broadcasting area A and the station 32-2 of the broadcasting area B can perform the area limited broadcasting using the same segment.

Further, in Fig. 4, the broadcasting areas B and C do not overlap each other, and thus the station 32-2 of the broadcasting area B and the station 32-3 of the broadcasting area C can perform the area limited broadcasting using the same segment.

However, in Fig. 4, the broadcasting areas A and C overlap each other, and thus the station 32-1 of the broadcasting area A and the station 32-3 of the broadcasting area C cannot use the same segment for the area limited broadcasting (as long as broadcasting is performed at the same time).

The reception terminal 33 is a portable terminal which can receive both the normal one seg broadcasting and the area limited broadcasting.

For example, as illustrated in Fig. 4, in a case where a user carrying the reception terminal 33 is in the broadcasting area A, the reception terminal 33 can receive the normal one seg broadcasting and the area limited broadcasting by the station 32-1 of the broadcasting area A.

In addition, a process where the reception terminal 33 receives the normal one seg broadcasting is the same as that of a reception terminal (normal one seg terminal) in the related art which receives normal one seg broadcasting, and thus description thereof will be omitted in the following.

[Description of segment used for arbitrary one seg broadcasting]

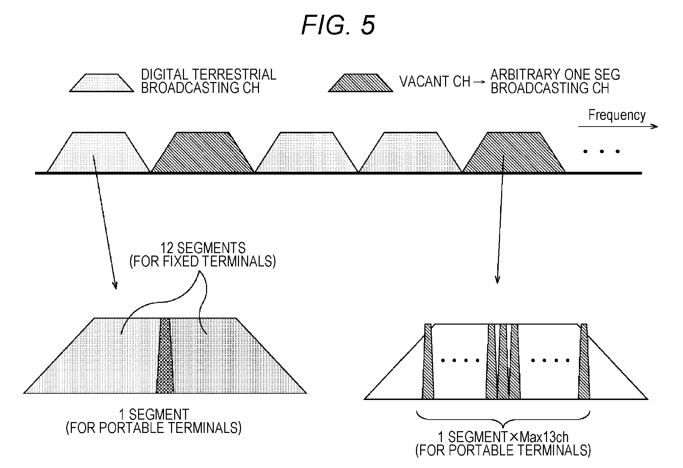

Fig. 5 is a diagram illustrating bandwidth assignment of the digital terrestrial broadcasting in the transmission and reception system 30 of Fig. 4.

As illustrated in Fig. 5, in the transmission and reception system 30, in a physical channel used for the digital terrestrial broadcasting, normal one seg broadcasting is performed using a bandwidth corresponding to a central segment and broadcasting for fixed terminals is performed using bandwidths corresponding to the remaining twelve segments of the overall bandwidths of the digital terrestrial broadcasting.

Each of one or more segments of a vacant channel can be used for the area limited broadcasting. In a single vacant channel, the maximum number of segments (logical channels) which can be used for the area limited broadcasting is thirteen channels.

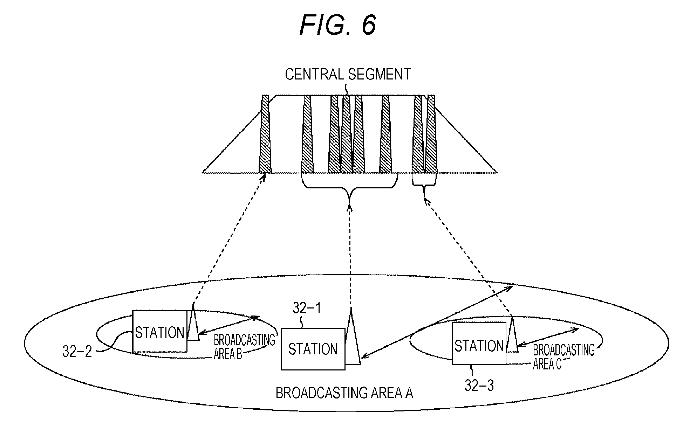

Fig. 6 is a diagram illustrating an example of the assignment of segments used for the arbitrary one seg broadcasting.

Any segment of a vacant channel may be assigned to the station 32 as a segment used for the area limited broadcasting which is arbitrary one seg broadcasting; however, if a certain station has one or more other stations which are, so to speak, subordinate thereto, a central segment may be assigned to the certain station.

In other words, for example, as illustrated in Fig. 6, the station 32-1 is, so to speak, a central station which has a predetermined district as the broadcasting area A, and the stations 32-2 and 32-3 are, so to speak, local stations which respectively have a building, an amusement park, or the like, in the district as the broadcasting areas B and C. In a case where the broadcasting area A includes the broadcasting areas B and C, one or more segments including a central segment of a predetermined vacant channel may be assigned to the station 32-1 which is a central station, and segments of the vacant channel other than the segments assigned to the station 32-1 may be assigned to the stations 32-2 and 32-3 which are local stations.

[Acquisition method of tuning information]

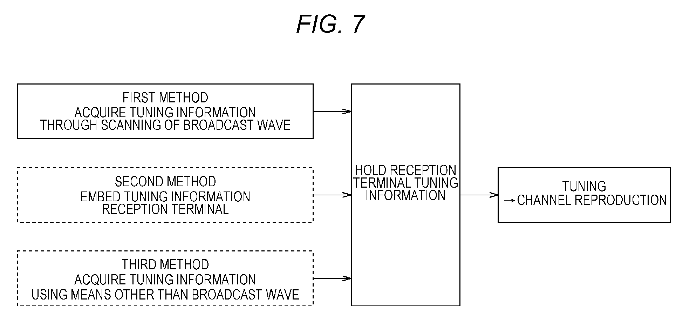

Fig. 7 is a diagram illustrating a method of acquiring tuning information of the area limited broadcasting.

As illustrated in Fig. 7, as methods of acquiring tuning information of the area limited broadcasting, there are mainly three methods, the first, second, and third methods.

The first method is a method of acquiring tuning information through channel scanning where broadcast waves of digital terrestrial broadcasting are scanned.

In the first method, the reception terminal 33 tunes each segment of each physical channel of digital terrestrial broadcasting, and acquires tuning information of area limited broadcasting which can be received.

According to the first method, a user carrying the reception terminal 33 does not need to be conscious of whether or not there is area limited broadcasting which can be received at a position of the user, and can automatically acquire tuning information of area limited broadcasting which can be received.

However, in the first method, the user is required to tune each segment of each physical channel of the digital terrestrial broadcasting for each movement, and it takes time to acquire tuning information of area limited broadcasting which can be received.

The second method is a method of embedding (storing in advance) tuning information in the reception terminal 33.

In the second method, tuning information is stored in the reception terminal 33 in advance, and thus it does not take time to acquire tuning information.

However, there are cases where, even if a user carrying the reception terminal 33 performs an operation for tuning a certain logical channel from the tuning information stored in advance, the logical channel (area limited broadcasting) cannot be received outside a broadcasting area of the logical channel.

The third method is a method of acquiring tuning information using means other than broadcast waves, that is, for example, through communication via the Internet, communication with a noncontact IC (Integrated Circuit) card, or the like.

According to the third method, it is possible to rapidly acquire tuning information as compared with the first method.

However, in the third method as well, there are cases where, even if a user carrying the reception terminal 33 performs an operation for tuning a certain logical channel, the logical channel cannot be received in the same manner as the second method.

As described above, in the first method of performing channel scanning for tuning each segment of each physical channel of the digital terrestrial broadcasting, it takes time to acquire tuning information as compared with the second and third methods.

Therefore, a description will be made of a method of more rapidly acquiring tuning information through channel scanning in the reception terminal 33.

[Description of NIT and SDT transmitted by station 32]

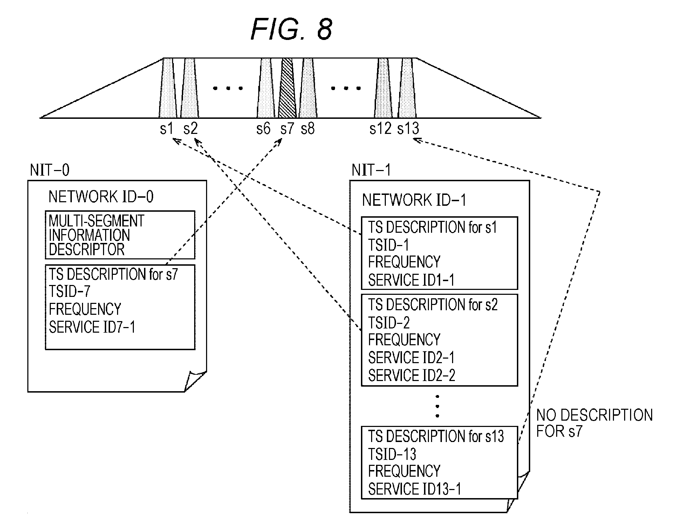

Fig. 8 is a diagram illustrating an NIT transmitted by the station 32 of Fig. 4.

Now, for example, if area limited broadcasting which can be received in a certain broadcasting area is performed using each of the thirteen segments s1 to s13 forming a physical channel, the station 32 to which a central segment is assigned transmits the following NIT-0 and NIT-1 using the central segment s7.

The NIT-0 is constituted by a network ID, a multi-segment information descriptor, and information (hereinafter, also referred to as TS information) regarding a TS of the central segment s7.

In addition, the multi-segment information descriptor is a descriptor indicating that arbitrary one seg broadcasting is performed using segments of a physical channel including the central segment s7.

Further, the TS information of the central segment s7 includes a TSID of the TS of the central segment s7, a frequency of the central segment s7, and a service ID of a broadcasting service of the central segment s7.

The NIT-1 is constituted by the network ID and TS information of the segments s1 to s6, and s8 to s13 other than the central segment s7. In addition, the network ID of the NIT-0 is different from a network ID of the NIT-1. In the example of Fig. 8, the network ID of the NIT-0 is 0, and the network ID of the NIT-1 is 1.

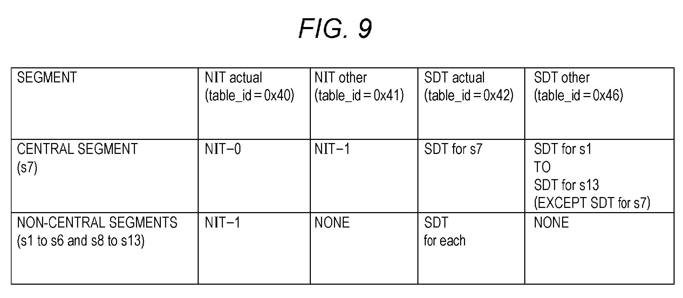

Fig. 9 is a diagram illustrating an NIT and an SDT transmitted using each segment.

As illustrated in Fig. 9, the NIT-0 is transmitted as NIT actual describing an NIT of a self-segment in the central segment s7.

The NIT-1 is transmitted as NIT other describing an NIT of segments (hereinafter, referred to as non-central segments) of a physical channel of the central segment s7, other than the central segment s7 which is a self-segment, in the central segment s7.

In addition, an SDT of the central segment s7 is transmitted as SDT actual describing an SDT of the self-segment in the central segment s7. In addition, an SDT of the non-central segments s1 to s6 and s8 to s13 is transmitted as SDT other describing the SDT of the non-central segments in the central segment s7.

Each NIT-1 is transmitted as NIT actual in the non-central segments s1 to s6 and s8 to s13, and none of them is transmitted as NIT other. Further, each of the SDTs of the self-segments s1 to s6 and s8 to s13 is transmitted as SDT actual in the non-central segments s1 to s6 and s8 to s13, and none of them is transmitted as SDT other.

As described above, in a case where the NIT and the SDT are transmitted, the reception terminal 33 sequentially tunes a central segment of each physical channel of the digital terrestrial broadcasting from a lower frequency.

In addition, in a case where the reception terminal 33 can receive a TS in the central segment, an NIT and an SDT of area limited broadcasting performed using the central segment are acquired from NIT actual and SDT actual of the TS.

The reception terminal 33 recognizes whether area limited broadcasting which is arbitrary one seg broadcasting is performed or normal one seg broadcasting is performed depending on whether or not there is multi-segment information descriptor in the NIT acquired from NIT actual of the TS of the central segment.

If it is recognized that the area limited broadcasting is performed, the reception terminal 33 acquires NITs and SDTs of area limited broadcasting performed using the non-central segments from NIT other and SDT other of the TS received in the central segment.

The reception terminal 33 creates a tuning table including tuning information of the area limited broadcasting from the NITs and SDTs acquired in the above-described way.

As described with reference to Figs. 8 and 9, since not only NIT actual and SDT actual but also NIT other and SDT other are disposed in the TS of the central segment, the reception terminal 33 simply sequentially tunes a central segment of each physical channel and thereby can acquire NITs and SDTs of the overall items of area limited broadcasting of a physical channel having the central segment.

Therefore, the reception terminal 33 can rapidly acquire tuning information of area limited broadcasting.

In addition, NIT other and SDT other are not necessarily transmitted in a central segment.

However, in a case where NIT other and SDT other are not transmitted in the central segment, the reception terminal 33 recognizes whether or not area limited broadcasting is performed depending on whether or not there is a multi-segment information descriptor of NIT actual of the central segment, and, when the area limited broadcasting is performed, it is necessary to acquire NIT actual and SDT actual of non-central segments where a TS can be received by sequentially tuning non-central segments.

Here, NIT actual includes information regarding a network where NIT actual is transmitted, and NIT other includes information regarding a network separated from a network where NIT other is transmitted. In addition, SDT actual includes information regarding a network where SDT actual is transmitted, and SDT other includes information regarding a network separated from a network where SDT other is transmitted.

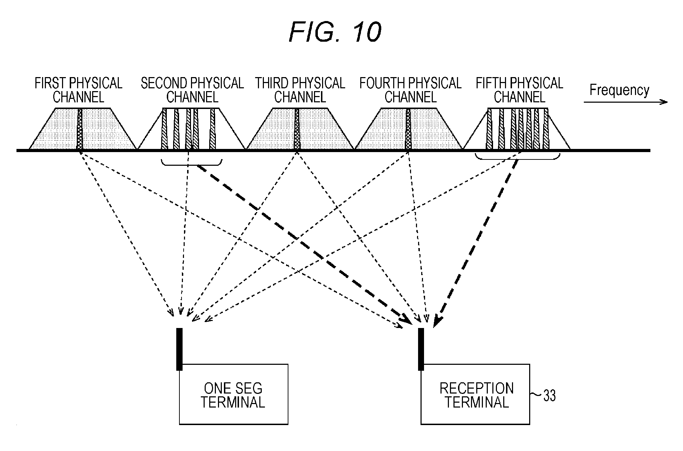

Fig. 10 is a diagram illustrating channel scanning of each of the reception terminals 33 of Fig. 4 and a normal one seg terminal 100 which is a reception terminal in the related art receiving normal one seg broadcasting.

The reception terminal 33 and the normal one seg terminal 100 in the related art, for example, sequentially tune a central segment of each physical channel from a lower frequency and acquire tuning information, thereby creating a tuning table.

The normal one seg terminal 100 does not correspond to area limited broadcasting (arbitrary one seg broadcasting), and thus disregards a multi-segment information descriptor of NIT actual disposed in a TS of a central segment of a physical channel assigned to area limited broadcasting. Therefore, the normal one seg terminal 100 does not generate operation errors but cannot acquire NIT other and SDT other.

As a result, as illustrated in Fig. 10, the normal one seg terminal 100 acquires tuning information from NITs and SDTs of normal one seg broadcasting and area limited broadcasting of a central segment of each physical channel.

In contrast, the reception terminal 33 corresponds to area limited broadcasting, and thus recognizes a multi-segment information descriptor of NIT actual disposed in a TS of a central segment of a physical channel assigned to area limited broadcasting, thereby obtaining NIT other and SDT other in addition to NIT actual and SDT actual.

As a result, the reception terminal 33 can acquire tuning information from NITs and SDTs of all the items of normal one seg broadcasting and area limited broadcasting assigned to each physical channel.

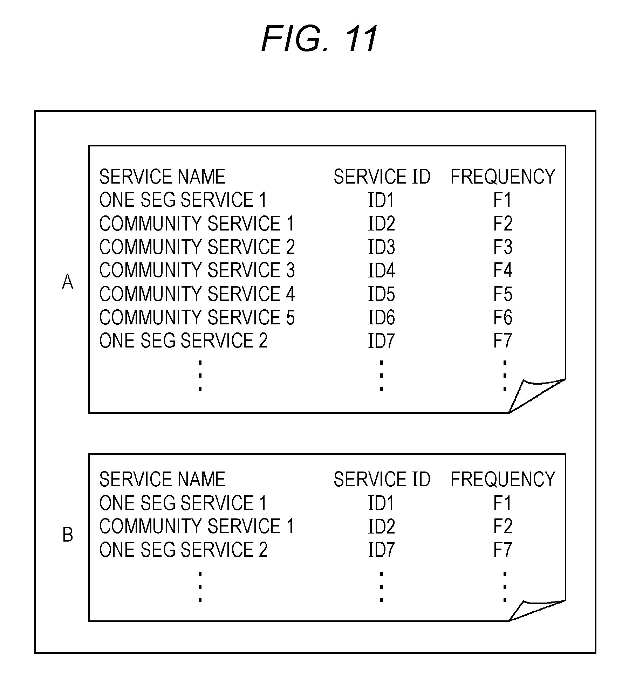

Fig. 11 is a diagram illustrating an example of the tuning table created by the reception terminal 33 and the tuning table created by the normal one seg terminal in the example of Fig. 10.

A of Fig. 11 illustrates a tuning table created by the reception terminal 33.

In the tuning table created by the reception terminal 33, first, a service name "one seg service 1", a service ID "ID1", and a frequency "F1", assigned to the central segment of the first physical channel of Fig. 10, are registered.

Next, service names "community service 1" to "community service 5" of area limited broadcasting corresponding to five segments service IDs "ID2" to "ID6", and frequencies "F2" to "F6", assigned to the second physical channel, are respectively registered.

In addition, a service name "one seg service 2" of normal one seg broadcasting, a service ID "ID7", and a frequency "F7", assigned to the central segment of the third physical channel, are registered.

This is also the same for the following, service names, service IDs, and frequencies of normal one seg broadcasting assigned to the central segment of the fourth physical channel and area limited broadcasting corresponding to seven segments assigned to the fifth physical channel are registered.

B of Fig. 11 illustrates a tuning table created by the normal one seg terminal 100.

In the tuning table created by the normal one seg terminal 100, in the same manner as the tuning table created by the reception terminal 33, first, a service name "one seg service 1" a service ID "ID1", and a frequency "F1", assigned to the central segment of the first physical channel, are registered.

Next, a service name "community service 1" of area limited broadcasting, a service ID "ID2", and a frequency "F2", assigned to the second physical channel, are registered.

In addition, in the same manner as the tuning table created by the reception terminal 33, a service name "one seg service 2" of normal one seg broadcasting, a service ID "ID7", and a frequency "F7", assigned to the central segment of the third physical channel, are registered.

This is also the same for the following, and, service names, service IDs, and frequencies of normal one seg broadcasting assigned to the central segment of the fourth physical channel and area limited broadcasting corresponding to the central segment assigned to the fifth physical channel are registered.

As described above, in the normal one seg terminal 100 in the related art, tuning information of area limited broadcasting of non-central segments is not acquired and thus is not registered in a tuning table, but tuning information of a central segment can be acquired and is thus registered in the tuning table.

Therefore, as described with reference to Figs. 8 and 9, even if a NIT and an SDT are transmitted, this does not hinder the normal one seg terminal 100 in the related art from receiving normal one seg broadcasting.

[Broadcasting area and line of flow of user]

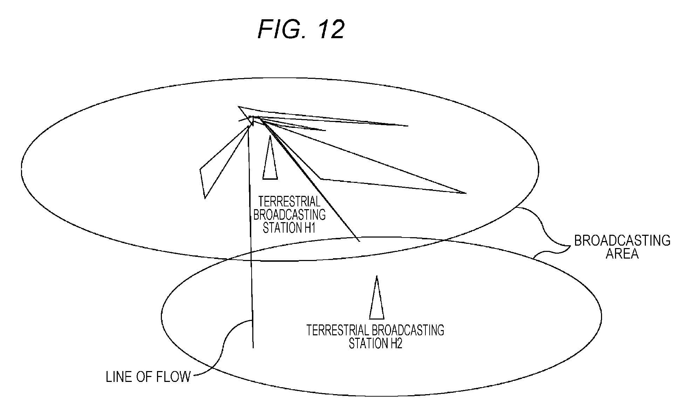

Fig. 12 is a diagram illustrating broadcasting areas of digital terrestrial broadcasting (normal one seg broadcasting) and lines of flow which are trajectories of movement of a user carrying the normal one seg terminal 100 which receives only normal one seg broadcasting.

Since a broadcasting area of the normal one seg broadcasting is wide, in daily life, a user carrying the normal one seg terminal 100 in the related art moves in a broadcasting area of a specific terrestrial broadcasting station H1 as a living area in many cases, and hardly moves from the broadcasting area to a broadcasting area of another terrestrial broadcasting station H2.

Therefore, as illustrated in Fig. 12, in the normal one seg terminal 100 carried by a user of which most of the lines of flow are in the broadcasting area of the terrestrial broadcasting station H1, and a few of the lines of flow are in the broadcasting area of the terrestrial broadcasting station H2, tuning information of normal one seg broadcasting by the terrestrial broadcasting station H1 is registered in a tuning table, and thereby (a service name of) normal one seg broadcasting by the terrestrial broadcasting station H1 which can be received in most cases can be presented to the user as (a service name of) normal one seg broadcasting which can be tuned by the user.

In addition, in the normal one seg terminal 100, in addition to tuning information of normal one seg broadcasting by the terrestrial broadcasting station H1, tuning information of normal one seg broadcasting by the terrestrial broadcasting station H2 is also registered, and thereby normal one seg broadcasting by each of the terrestrial broadcasting stations H1 and H2 can be presented to the user as normal one seg broadcasting which can be tuned by the user.

However, in this case, in a case where the user carrying the normal one seg terminal 100 is in the broadcasting area of the terrestrial broadcasting station H1, even if normal one seg broadcasting of the terrestrial broadcasting station H2 is tuned, the normal one seg terminal 100 cannot receive normal one seg broadcasting of the terrestrial broadcasting station H2.

In the same manner, in a case where the user carrying the normal one seg terminal 100 is in the broadcasting area of the terrestrial broadcasting station H2, even if normal one seg broadcasting of the terrestrial broadcasting station H1 is tuned, the normal one seg terminal 100 cannot receive normal one seg broadcasting of the terrestrial broadcasting station H1.

If only normal one seg broadcasting which can be received is to be presented to the user in the normal one seg terminal 100, tuning information of normal one seg broadcasting by the terrestrial broadcasting station H1 and tuning information of normal one seg broadcasting by the terrestrial broadcasting station H2 are divided and are registered in tuning tables, and the user is required to change (perform an operation) the tuning tables used for tuning as necessary.

As described above, since a broadcasting area is wide in the normal one seg broadcasting, the frequency where the user moves from the broadcasting area including the living area to another broadcasting area in daily life is very small.

Therefore, cases where a tuning table used for tuning is required to be changed are few, further, the number of tuning tables in which tuning information is divided and is registered is small, and changing in the tuning tables is also easy.

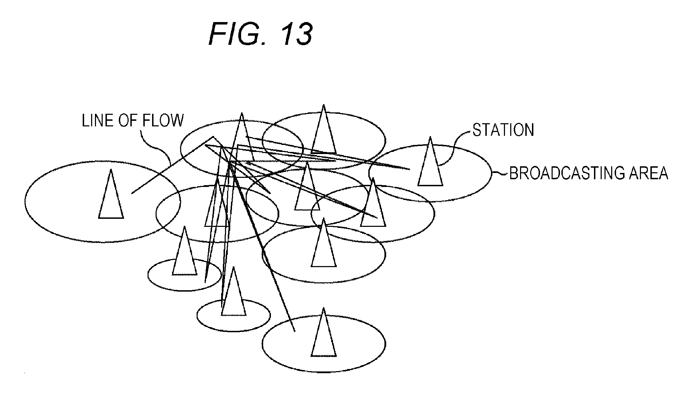

Fig. 13 is a diagram illustrating broadcasting areas of area limited broadcasting and lines of flow which are trajectories of movement of a user carrying the reception terminal 33 which can receive the area limited broadcasting.

Since a broadcasting area of area limited broadcasting is narrow, many stations are densely provided in a range which is not greatly wide, and, as a result, it is expected that the user carrying the reception terminal 33 frequently moves between broadcasting areas of many stations.

Therefore, it is expected that area limited broadcasting (logical channel) which can be received in the reception terminal 33 is frequently varied in the middle of the user moving in the living area.

In order to present only area limited broadcasting which can be received to the user in the reception terminal 33 in the same manner as the normal one seg terminal 100 described with reference to Fig. 12, tuning information of many items of area limited broadcasting is divided and is registered in tuning tables, and the user changes tuning tables used for tuning as necessary. Thereby, it is expected that the user is required to change tuning tables by targeting many tuning tables, and the frequency of changes also increases.

Therefore, in the reception terminal 33, it is not realistic that tuning information of many items of area limited broadcasting is divided and is registered in many tuning tables, and the user changes tuning tables used for tuning.

In addition, for example, in relation to area limited broadcasting performed in an event place, a period of time where broadcasting is performed or a broadcasting time slot is expected to be restricted, and thus there are cases where area limited broadcasting can be received and cannot be received in a broadcasting area of a certain station.

Therefore, in the reception terminal 33, even if tuning information of area limited broadcasting is embedded as limited and permanent information in advance, tuning information of area limited broadcasting of which a period of time for broadcasting has elapsed is useless, and, further it is difficult to support area limited broadcasting which will be started in the future.

On the other hand, in the reception terminal 33, even if channel scanning described with reference to Fig. 10 is performed and tuning information of area limited broadcasting which can be received at that time is acquired, in a case where a user moves or time has elapsed thereafter, it cannot be said that area limited broadcasting corresponding to the tuning information acquired through the channel scanning in the past can be received.

Therefore, for example, if area limited broadcasting which can be received at that time is to be presented to a user as area limited broadcasting which can be received by the user at a position of the user, it is necessary to acquire tuning information of area limited broadcasting which can be received by performing channel scanning at all times (at a short cycle).

However, the channel scanning described with reference to Fig. 10 rapidly acquires tuning information as compared with channel scanning for tuning each segment of each physical channel of digital terrestrial broadcasting but needs a certain amount of time.

Therefore, performing the channel scanning at all times is not realistic.

Therefore, in order to rapidly present a user area limited broadcasting which can be received, station information regarding a station, which includes at least broadcasting area information which is information of a broadcasting area in which a broadcast wave can be received from a station, is presented to the reception terminal 33, and, the reception terminal 33 selects a station of area limited broadcasting which can be received as a tunable station which can be tuned using the station information.

[Description of station information]

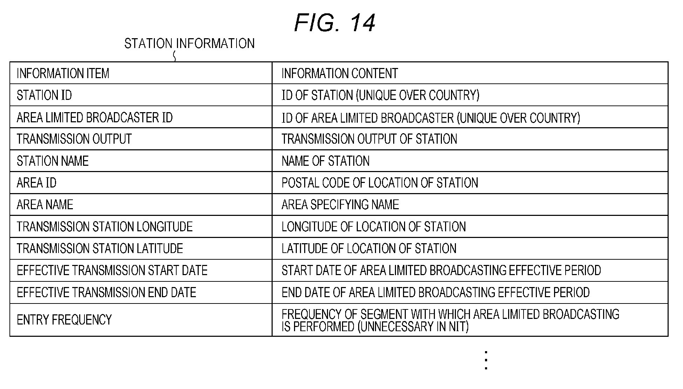

Fig. 14 is a diagram illustrating station information.

The station information includes a station ID, an area limited broadcaster ID, a transmission output, a station name, an area ID, an area name, a transmission station longitude, a transmission station latitude, the effective transmission start date, the effective transmission end date, an entry frequency, and the like.

The station ID is a unique ID for identifying a station.

In addition, as an ID for identifying a station, a method of employing a network ID may be considered.

However, the network ID is formed of 16 bits, and it is expected that it is difficult to uniquely assign a network ID of 16 bits to a station in consideration of many stations provided performing area limited broadcasting.

Therefore, a station ID is employed in order to uniquely identify a station. In addition, the station ID is particularly multibit as long as a plurality of stations can be uniquely identified.

The area limited broadcaster ID is a unique ID for identifying a business operator (area limited broadcaster) performing area limited broadcasting. The area limited broadcaster may perform area limited broadcasting in one or more stations, and thus area limited broadcaster IDs may be the same even in station information where station IDs are different.

In addition, although not illustrated in Fig. 14, the station information may include the name of an area limited broadcaster identified by the area limited broadcaster ID.

The transmission output is a transmission output (power) of a broadcast wave from a station identified by the station ID.

The station name is the name of the station identified by the station ID.

The area ID is an ID for identifying a location of the station identified by the station ID, and, may employ, for example, a postal code, an area code, or the like of a location of the station identified by the station ID.

The area name is the name of the location of the station identified by the station ID, or the name (area specifying name) of an area of a broadcasting area.

The transmission station longitude and the transmission station latitude are positional information indicating a position (location) of the station identified by the station ID, and are respectively longitude and latitude of the location of the station identified by the station ID.

The effective transmission start date and the effective transmission end date are respectively the start date and the end date of an area limited broadcasting effective period which is a period of time when the station identified by the station ID performs area limited broadcasting.

In addition, although not illustrated in Fig. 14, in a case where a time slot when area limited broadcasting is performed is defined in a day in the station identified by the station ID, the start time and the end time of the time slot may be included in the station information.

The entry frequency is a frequency (a frequency of a segment (representative segment) performing area limited broadcasting) for tuning area limited broadcasting which is performed by the station identified by the station ID.

In addition, in a case where the station information is provided to the reception terminal 33 through transmission with a segment used for area limited broadcasting, the entry frequency is included in an NIT transmitted with the segment and thus is not necessarily included in the station information.

In addition, in the station information of Fig. 14, the area name of the station identified by the station ID functions as broadcasting area information.

In addition, in the station information of Fig. 14, a broadcasting area which can receive a broadcast wave from the station identified by the station ID can be recognized by using the transmission station longitude and the transmission station latitude which are positional information of the station identified by the station ID, and the transmission output, and, therefore, the transmission station longitude, the transmission station latitude, and the transmission output also function as broadcasting area information.

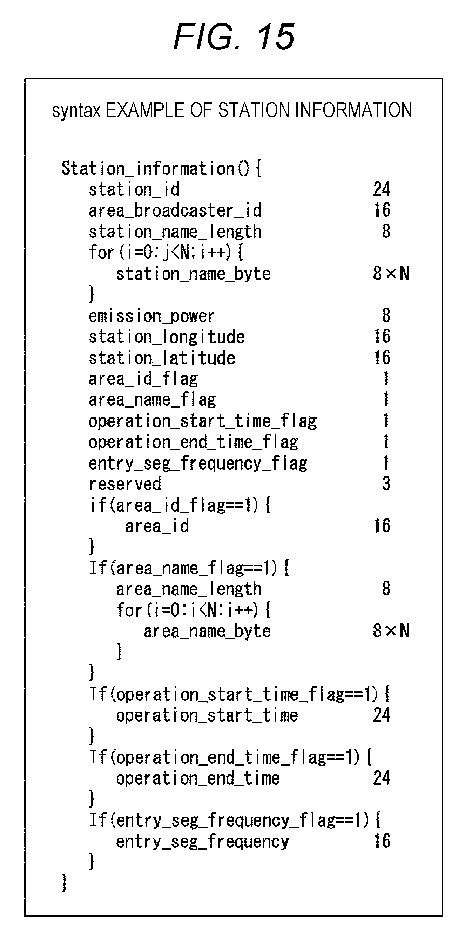

Fig. 15 is a diagram illustrating an example of the syntax of the station information.

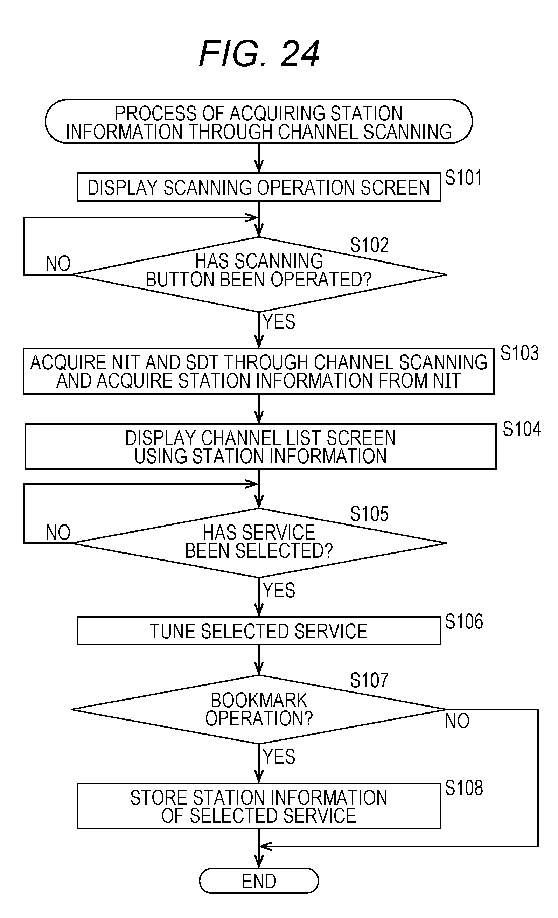

In the station information Station_information () of Fig. 15, 24-bit station_id is a station ID, and 16-bit area_broadcaster_id is an area limited broadcaster ID.

8-bit station_name_length indicates the number of letters (number of bytes) of the station name, and an N (=station_name_length) sequence of station_name_byte of 8 bits indicates the station name.

8-bit emission_power is a transmission output, and 16-bit station_longitude and station_latitude are respectively a transmission station longitude and a transmission station latitude.

1-bit area_id_flag, area_name_flag, operation_start_time_flag, operation_end_time_flag, and entry_seg_frequency_flag respectively indicate whether or not an area ID, the area name, the effective transmission start date, the effective transmission end time, and an entry frequency are included in the station information.

3 bits following entry_seg_frequency_flag are reserved for the future.

16-bit area_id is an area ID, and is included in the station information Station_information () if area_id_flag is 1.

8-bit area_name_length indicates the number of letters of the area name, and an N (=area_name_length) sequence of 8-bit area_name_byte indicates the area name. If area_name_flag is 1, area_name_length and area_name_byte are included in the station information Station_information ().

24-bit operation_start_time and operation_end_time are respectively the effective transmission start date and the effective transmission end date. If operation_start time_flag is 1, and operation_end_time_flag is 1, operation_start_time and operation_end_time are included in the station information Station_information ().

16-bit entry_seg_frequency is an entry frequency, and is included in the station information Station_information () if entry_seg_frequency_flag is 1.

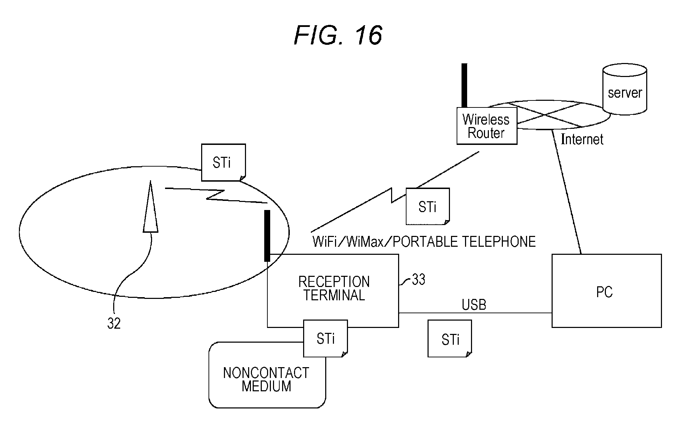

Fig. 16 is a diagram illustrating an acquisition method where the reception terminal 33 acquires station information.

Station information STi of any number of stations of one or more is transmitted from the station 32 using a segment and is received by the reception terminal 33, thereby being acquired in the reception terminal 33.

In addition, the station information STi is stored in advance in a non-contact medium such as a non-contact IC card (for example, Felica (registered trademark)), and can be acquired in the reception terminal 33 through proximity communication for sending and receiving the station information STi between the non-contact medium and the reception terminal 33.

In addition, the station information STi is stored in a server on the Internet, and can be acquired in the reception terminal 33 by performing wireless communication for sending and receiving the station information STi between the server and the reception terminal 33 using a wireless LAN or the like.

Further, the station information STi is downloaded to a PC (Personal Computer) from a server on the Internet, and can be acquired in the reception terminal 33 by performing communication for sending and receiving the station information STi between the PC and the reception terminal 33 using a USB (Universal Serial Bus) or the like.

In addition, in a case where the station information is transmitted from the station 32 using a segment, the station information may be included in an NIT.

Further, the station 32 may include station information of the station 32 in NIT actual as a descriptor so as to be transmitted using a representative segment which is a segment of one or more segments used for area limited broadcasting by the station 32.

Here, as the representative segment of the station 32, any one segment of one or more segments used for area limited broadcasting by the station 32 may be employed. However, in a case where one or more segments used for area limited broadcasting by the station 32 include a central segment, for example, the central segment may be a representative segment.

In addition, the station 32 may include station information of stations other than the station 32 in NIT other as a descriptor so as to be transmitted with a representative segment of the station 32.

Further, other stations of which station information is included in NIT other transmitted by the station 32 may employ any station such as a station which performs area limited broadcasting using other segments of a physical channel having a segment which is used for area limited broadcasting by the station 32.

In addition, transmission of NIT other including station information of other stations can be performed only in a station which has the central segment as a representative segment.

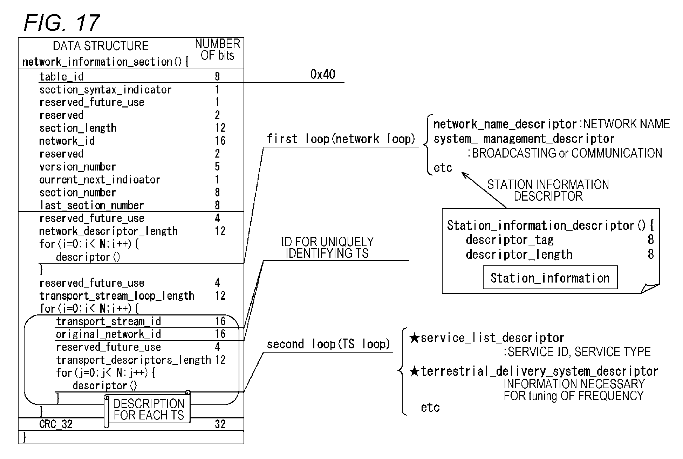

Fig. 17 is a diagram illustrating an example of the syntax (data structure) of the NIT including station information.

In the NIT, sequentially from the top, an 8-bit table ID (table_id), a 1-bit section syntax indicator (section_syntax_indicator), and a 1-bit future use region (reserved_future_use) are disposed.

In a case where the NIT is an NIT as NIT actual, the table ID becomes 0x40, and in a case where the NIT is an NIT as NIT other, the table ID becomes 0x41.

After the future use region, a 2-bit vacant region (reserved), a 12-bit section length (section_length), a 16-bit network ID (network_ID), a 2-bit vacant region (reserved), a 5-bit version number (version_number) are sequentially disposed.

Thereafter, a 1-bit current next indicator (current_next_indicator), a 8-bit section number (section_number), an 8-bit last section number (last_section_number), and a 4-bit future use region are sequentially disposed.

Next, a 12-bit network descriptor length (network_descriptor_length), and a network loop which is a first loop are sequentially disposed.

One or more descriptors (descriptor ()) corresponding to the network descriptor length may be disposed in the network loop.

As a descriptor of the network loop, a network name descriptor (network_name_descriptor), a system management descriptor (system_management_descriptor), and the like are disposed for each network ID described in the front part.

The network name is described in the network name descriptor, and information indicating whether a network is a broadcasting network or a communication network is described in the system management descriptor.

Here, in a case where the station information Station_information () is included in the NIT, a station information descriptor Station_information_descriptor () may be further included in the descriptor of the network loop.

In the station information descriptor Station_information_descriptor ( ), 8-bit descriptor_tag indicating that the station information is included, and 8-bit descriptor_length indicating the size of the station information descriptor Station_information_descriptor () are sequentially disposed.

In addition, thereafter, the station information Station_information () (Fig. 15) is disposed.

In addition, in a case where a multi-segment information descriptor is described in an NIT, the multi-segment information descriptor is also described as a descriptor of a network loop of the NIT as NIT actual.

After the network loop, a 4-bit future use region, a 12-bit TS loop length (transport_stream_loop_length), a TS loop which is a second loop, and a 32-bit CRC (Cyclic Redundancy Check) 32 value (CRC_32) are sequentially disposed.

One or more descriptors (descriptor ()) corresponding to the TS loop length may be disposed in the TS loop.

As descriptors of the TS loop, a service list descriptor (service_list_descriptor), a terrestrial system descriptor (terrestrial_delivery_system_descriptor), and the like are described for each TS. A service ID, and a service type indicating a broadcasting service type (television broadcasting, radio broadcasting, and the like) are described in the service list descriptor, and information needed for tuning a frequency (entry frequency) or the like is described in the terrestrial system descriptor.

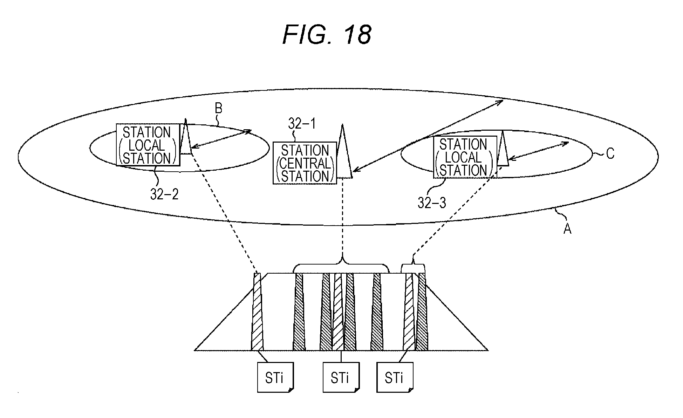

Fig. 18 is a diagram illustrating a method where the station information STi is transmitted by the station 32.

In Fig. 18, the station 32-1 is a central station, and the stations 32-2 and 32-3 are local stations of the station 32-1.

In addition, the broadcasting area A of the station 32-1 which is a central station includes the broadcasting area B of the station 32-2 which is a local station and the broadcasting area C of the station 32-3 which is the same local station.

Further, five segments including a central segment of a predetermined physical channel are assigned to the station 32-1 which is a central station.

In addition, a single non-central segment (a non-central segment which is not assigned to the station 32-1) of the predetermined physical channel is assigned to the station 32-2 which is a local station, and two non-central segments (non-central segments which are not assigned to any of the stations 32-1 and 32-2) of the predetermined physical channel are assigned to the station 32-3 which is a local station.

The station 32-1 includes the station information STi of the station 32-1 itself in an NIT so as to be transmitted with a central segment which is a representative segment by using the central segment as the representative segment among the five segments assigned to the station 32-1.

The station 32-2 includes the station information STi of at least the station 32-2 itself in an NIT so as to be transmitted with a representative segment by using a single segment assigned to the station 32-2 as the representative segment.

In the same manner as the station 32-3, the station 32-3 includes the station information STi of at least the station 32-3 itself in an NIT so as to be transmitted with a representative segment by using an arbitrary segment of the two segments assigned to the station 32-3 as the representative segment.

In addition, as described above, the station 32 can transmit station information of other stations.

[Configuration example of station 32]

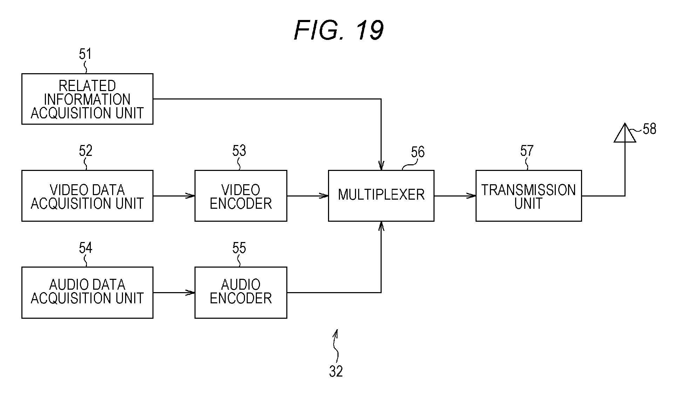

Fig. 19 is a block diagram illustrating a detailed configuration example of the station 32 of Fig. 4.

In Fig. 19, the station 32 includes a related information acquisition unit 51, a video data acquisition unit 52, a video encoder 53, an audio data acquisition unit 54, an audio encoder 55, a multiplexer 56, a transmission unit 57, and an antenna 58.

The related information acquisition unit 51 generates and acquires related information such as PSI (Program Specific Information) which is control information such as information, including a PMT and a PAT or an NIT and an SDT of area limited broadcasting, for receiving a service, frequency information, and information for specifying a packet corresponding to the service, and information (hereinafter, referred to as display control information) for performing display using a browser in area limited broadcasting, so as to be supplied to the multiplexer 56.

In addition, the related information acquisition unit 51 acquires station information included in an NIT when the NIT is generated.

In other words, in a case where station information of the station 32 is stored, for example, in a memory (not illustrated), the related information acquisition unit 51 acquires the station information of the station 32 by reading the station information from the memory.

Further, in a case where station information of other stations is included in the NIT, for example, the related information acquisition unit 51 downloads and acquires the station information of other stations from other stations via a network.

The video data acquisition unit 52 acquires video data of area limited broadcasting from a built-in HDD (Hard Disk Drive), an external serve, a camera, (not illustrated), or the like, so as to be supplied to the video encoder 53.

The video encoder 53 encodes the video data supplied from the video data acquisition unit 52 on the basis of an encoding method such as MPEG (Moving Picture Experts Group) so as to be supplied to the multiplexer 56.

The audio data acquisition unit 54 acquires audio data of area limited broadcasting from a built-in HDD (Hard Disk Drive), an external serve, a microphone, (not illustrated), or the like, so as to be supplied to the audio encoder 55.

The audio encoder 55 encodes the audio data supplied from the audio data acquisition unit 54 on the basis of an encoding method such as MPEG (Moving Picture Expert Group) so as to be supplied to the multiplexer 56.

The multiplexer 56 generates a TS by multiplexing the related information from the related information acquisition unit 51, the video data from the video encoder 53, and the audio data from the audio encoder 55, so as to be supplied to the transmission unit 57.

The transmission unit 57 transmits the TS supplied from the multiplexer 56 using a predetermined segment via the antenna 58.

In the transmission unit 57, in the TS supplied from the multiplexer 56, a TS where an NIT including station information of the station 32 is multiplexed as related information is transmitted using a representative segment of the station 32.

[Description of process of station 32]

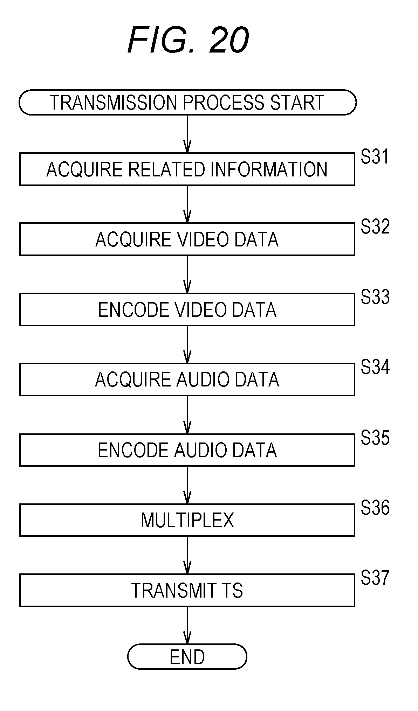

Fig. 20 is a flowchart illustrating a process (transmission process) of the station 32 of Fig. 19.

In step S31, the related information acquisition unit 51 acquires station information which is to be transmitted by the station 32, that is, station information of the station 32 or station information of other stations, and generates and acquires related information such as PSI of area limited broadcasting such as an EIT including the station information or display control information, so as to be supplied to the multiplexer 56.

In step S32, the video data acquisition unit 52 acquires video data of area limited broadcasting so as to be supplied to the video encoder 53.

In step S33, the video encoder 53 encodes the video data supplied from the video data acquisition unit 52 so as to be supplied to the multiplexer 56.

In step S34, the audio data acquisition unit 54 acquires audio data of area limited broadcasting so as to be supplied to the audio encoder 55.

In step S35, the audio encoder 55 encodes the audio data supplied from the audio data acquisition unit 54 so as to be supplied to the multiplexer 56.

In step S36, the multiplexer 56 generates a TS by multiplexing the related information from the related information acquisition unit 51, the video data from the video encoder 53, and the audio data from the audio encoder 55.

Here, in a case where the transmission unit 57 transmits the TS with the central segment, the multiplexer 56 generates, as a TS of the central segment, a TS which includes the NIT-0 (Fig. 8) as NIT actual, includes the NIT-1 as NIT other, includes the SDT of a self-segment as SDT actual, and includes the SDTs of non-central segments as SDT other.

Further, in a case where the transmission unit 57 transmits the TS with the non-central segments, the multiplexer 56 generates, as a TS of the non-central segments, a TS which includes the NIT-1 as NIT actual and includes the SDT of the self-segment as SDT actual.

Furthermore, here, since the central segment is a representative segment, NIT actual (NIT-0) in which station information of the station 32 is described is included in the TS of the central segment.

In addition, NIT other (NIT-1) in which station information other than the station 32 is described may be included in the TS of the central segment.

Further, in a case where the non-central segment is a representative segment, NIT actual (NIT-1) in which station information of the station 32 is described is included in the TS of the non-central segment which is a representative segment.

In step S37, the transmission unit 57 transmits the TS supplied from the multiplexer 56 with a predetermined segment which is used to transmit the TS via the antenna 58, and finishes the process.

As above, the station 32 acquires station information of the station 32 or other stations, so as to be transmitted with a representative segment which is a segment of one or more segments used for arbitrary one seg broadcasting (area limited broadcasting) by the station 32, and thereby the reception terminal 33 which acquires the station information can rapidly present area limited broadcasting which can be received using the station information.

[Detailed configuration example of reception terminal 33]

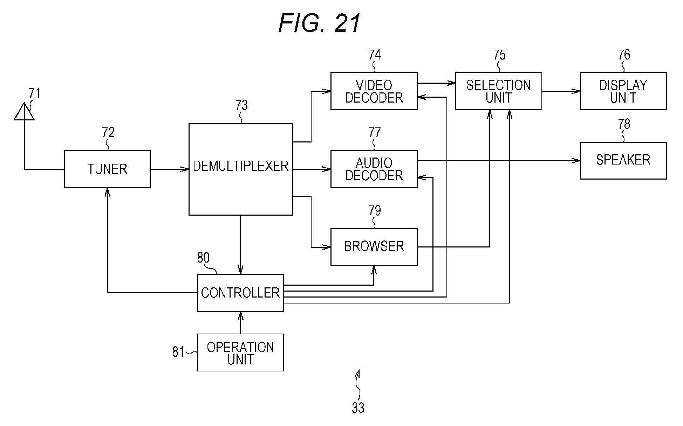

Fig. 21 is a block diagram illustrating a detailed configuration example of the reception terminal 33 of Fig. 4.

In Fig. 21, the reception terminal 33 includes an antenna 71, a tuner 72, a demultiplexer 73, a video decoder 74, a selection unit 75, a display unit 76, an audio decoder 77, a speaker 78, a browser 79, a controller 80, and an operation unit 81.

The antenna 71 receives a broadcast wave of the UHF band from the terrestrial broadcasting station 31 or the station 32, and supplies an IF (Intermediate Frequency) signal obtained by receiving the broadcast wave to the tuner 72.

The tuner 72 tunes (a signal of) normal one seg broadcasting or area limited broadcasting of a predetermined logical channel (segment) from the IF signal from the antenna 71 under the control of the controller 80, and supplies a TS obtained as a result thereof to the demultiplexer 73.

The demultiplexer 73 divides the TS supplied from the tuner 72 into video data, audio data, display control information, respective pieces of information of PSI, and the like. The demultiplexer 73 supplies the video data to the video decoder 74 and supplies the audio data to the audio decoder 77. In addition, the demultiplexer 73 supplies the display control information to the browser 79, and supplies the respective pieces of information of PSI and the like to the controller 80.

The video decoder 74 decodes the video data supplied from the demultiplexer 73 using a method corresponding to that of the video encoder 53 (Fig. 19) under the control of the controller 80, so as to be supplied to the selection unit 75.

The selection unit 75 selects the video data supplied from the video decoder 74 or the video data supplied from the browser 79 under the control of the controller 80, so as to be supplied to the display unit 76.

In addition, the selection unit 75 supplies video data of an image such as OSD (On Screen Display) to the display unit 76 under the control of the controller 80.

The display unit 76 displays images of normal one seg broadcasting or area limited broadcasting on the basis of the video data supplied from the selection unit 75.

The audio decoder 77 decodes the audio data supplied from the demultiplexer 73 using a method corresponding to that of the audio encoder 55 (Fig. 19) under the control of the controller 80, so as to be supplied to the speaker 78.

The speaker 78 outputs sound corresponding to the audio data from the audio decoder 77, that is, sound of normal one seg broadcasting or area limited broadcasting.

In addition, the speaker 78 may output predetermined other sound (for example, a beep sound or the like) under the control of the controller 80.

The browser 79 analyzes the display control information supplied from the demultiplexer 73, and generates video data which is supplied to the selection unit 75.

The controller 80 performs various processes and controls the respective blocks forming the reception terminal 33 in response to an operation signal from the operation unit 81.

In other words, the controller 80 stores a frequency of a central segment of each physical channel of digital terrestrial broadcasting as a preset frequency for channel scanning, and performs tuning control for controlling the tuner 72 such that (a segment of) the preset frequency is sequentially tuned while channel scanning is performed.

In addition, the controller 80 generates a tuning table on the basis of NIT actual and SDT actual, or NIT actual, NIT other, SDT actual, and SDT other of the central segment of each physical channel included in the PSI supplied from the demultiplexer 73, so as to be stored in a built-in memory (not illustrated).

Further, the controller 80 supplies the service names registered in the tuning table to the display unit 76 via the selection unit 75 so as to be displayed in response to an operation signal from the operation unit 81.

Here, a user may view the service names displayed on the display unit 76 and operate the operation unit 81 so as to select the service name of a service (logical channel) which is a viewing target.

The controller 80 recognizes a frequency as tuning information of the service of the service name of the viewing target from the tuning table according to the operation of the operation unit 81, and performs tuning control for controlling the tuner 72 so as to tune (a segment of) the frequency.

In addition, the controller 80 controls the video decoder 74, the selection unit 75, the audio decoder 77, and the browser 79 on the basis of the respective pieces of information of the PSI supplied from the demultiplexer 73. Specifically, the controller 80 controls, for example, the video decoder 74 and the audio decoder 77 such that the video data output from the video decoder 74 is synchronized with the audio data output from the audio decoder 77.

Further, in a case where station information is included in an NIT of PSI, the controller 80 acquires the station information so as to be stored as necessary.

In addition, the controller 80 performs tuning control using the station information.

In other words, the controller 80 selects a station of area limited broadcasting which can be currently received as a tunable station which can be tuned using the station information, and displays the station name (Fig. 14) of the tunable station or the service name of a service of area limited broadcasting performed by the tunable station on the display unit 76 via the selection unit 75.

Further, the controller 80 recognizes a frequency (of a service) of the area limited broadcasting of the tunable station from the station information or the tuning table and performs tuning control for controlling the tuner 72 so as to tune the frequency.

The operation unit 81 is operated by the user and supplies an operation signal corresponding to the operation to the controller 80. In addition, the operation unit 81 also includes a button displayed as a GUI (Graphics User Interface) on the display unit 76 in addition to physical buttons and the like.

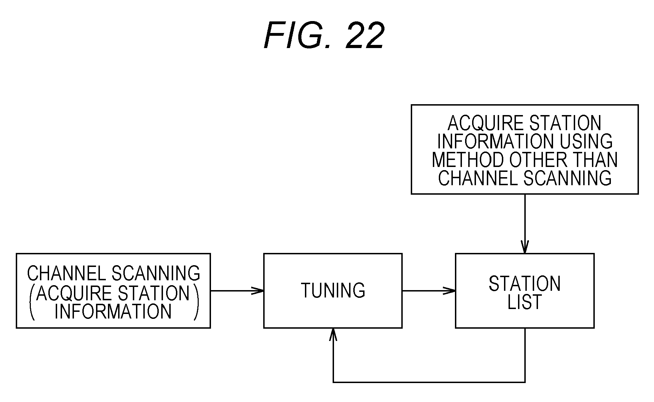

Fig. 22 is a diagram illustrating acquisition and use of station information in the reception terminal 33 of Fig. 21.

As described above, in a case where the station 32 includes station information in an NIT so as to be transmitted, the reception terminal 33 can acquire the station information from the NIT which is received, for example, when channel scanning is performed.

In addition, the reception terminal 33 may acquire station information using methods other than the channel scanning as described with reference to Fig. 16.

In the reception terminal 33, the controller 80 acquires station information, and registers the station information in a station list which is a list in which the station information is registered (stored) as necessary.

In addition, the controller 80 performs tuning control using the station information.

[Configuration example of controller 80]

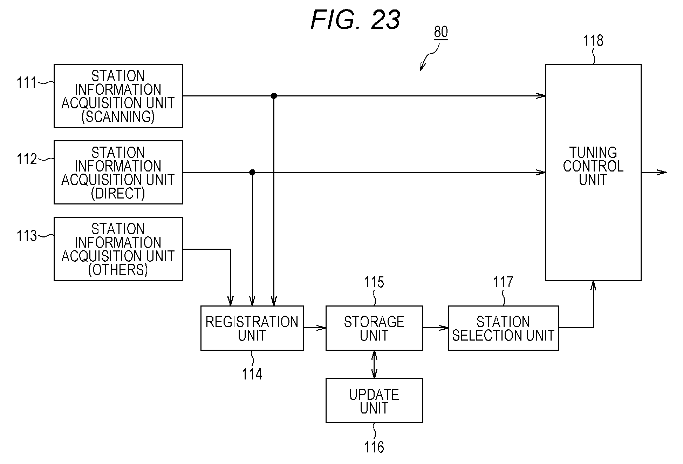

Fig. 23 is a block diagram illustrating a functional configuration example of a portion of the controller 80 of Fig. 21 which performs tuning control using the station information.

In Fig. 23, the controller 80 has station information acquisition units 111, 112 and 113, a registration unit 114, a storage unit 115, an update unit 116, a station selection unit 117, and a tuning control unit 118.

The station information acquisition units 111, 112 and 113 acquire station information.

In other words, the station information acquisition unit 111 acquires the station information from an NIT obtained by the tuner 72 performing channel scanning, so as to be supplied to the registration unit 114 and the tuning control unit 118.

Here, for example, in a case where the operation unit 81 is operated so as to perform channel scanning, the tuning control unit 118 described later performs tuning control for controlling the tuner 72 such that frequencies of central segments of the respective physical channels of digital terrestrial broadcasting, stored as the preset frequencies, are sequentially tuned.

The tuner 72 tunes a preset frequency in response to the tuning control of the tuning control unit 118, and supplies a TS to the demultiplexer 73 in a case where area limited broadcasting can be received at the tuned preset frequency, that is, as a result of the tuning, the TS of the area limited broadcasting can be obtained.

The demultiplexer 73 separates PSI from the TS from the tuner 72 so as to be supplied to the controller 80.

In the above-described way, when channel scanning is performed, the controller 80 creates a tuning table in which tuning information of services (area limited broadcasting) which can be received at that time is registered, from an NIT and an SDT included in the PSI supplied from the demultiplexer 73 as necessary.

In addition, in the controller 80, the station information acquisition unit 111 acquires station information from the NIT obtained through the channel scanning.

The station information acquisition unit 112 acquires station information using a direct method so as to be supplied to the registration unit 114 and the tuning control unit 118.

Here, for example, in a case where area limited broadcasting performed by the station 32 is broadcasting regarding an event performed in a broadcasting area of the station 32, a poster in which station information of the station 32 is printed in a form of a bar code or the like, or a poster in which a wireless tag storing the station information is embedded may be put up in the broadcasting area of the station 32.

In this case, the station information acquisition unit 112 has a reading device reading the bar code or a reader-writer which performs proximity communication (non-contact communication) with the wireless tag, embedded therein, and, when a user makes the reception terminal 33 come close to the poster in order to acquire the station information of the station 32, the station information of the station 32 is acquired from the bar code or the wireless tag of the poster.

As described above, a method of acquiring station information in which only the station information of the station 32 can be obtained in a broadcasting area of the specific station 32 is the direct method.

The station information acquisition unit 113 acquires station information using methods (other methods) other than the channel scanning and the direct method, so as to be supplied to the registration unit 114.

In other words, in a case where arbitrary one seg broadcasting or normal one seg broadcasting is received (a TS of the arbitrary one seg broadcasting or the normal one seg broadcasting can be obtained) in the tuner 72, when station information of each of one or more stations is included in an NIT of the TS of the arbitrary one seg broadcasting or the normal one seg broadcasting, the station information acquisition unit 113 can acquire the station information.

In addition, for example, in a case where the reception terminal 33 has a Web browser function, and a Web server on the Internet provides station information of each of one or more stations, the station information acquisition unit 113 accesses the Web server and can acquire the station information.

In addition, in a case where the reception terminal 33 is connected to a PC which downloads station information from a server which provides the station information of each of one or more stations, the station information acquisition unit 113 can acquire the station information from the PC.

In addition, for example, in a case where a printed matter (for example, a poster, a catalog, a magazine, or the like) in which station information of each of one or more stations is printed in a bar code, or a printed matter in which a wireless tag storing station information of each of one or more stations is embedded is provided, when the user makes the reception terminal 33 come close to the printed matter, the station information acquisition unit 113 can acquire the station information from the bar code or the wireless tag of the printed matter.

The registration unit 114 supplies the station information supplied from the station information acquisition units 111 to 113 to the storage unit 115 so as to be stored (registered in the station list of the storage unit 115) as necessary.

In other words, the registration unit 114 stores only station information which is requested to be registered by a user of pieces of the station information supplied from the station information acquisition units 111 to 113, into the storage unit 115.

Here, for example, there are cases where the tuning control unit 118 performs tuning control using the station information supplied from the station information acquisition unit 111, and thereby a user who views area limited broadcasting received by the tuner 72 does not want to view the area limited broadcasting thereafter.

In this case, station information where the area limited broadcasting is performed is unnecessary.

In addition, if a plurality of pieces of station information including such unnecessary station information is stored in the storage unit 115, (station names of) a plurality of stations are displayed on a station list screen described later, and, as a result, there are cases where it is difficult for a user to select a desired station.

Therefore, the registration unit 114 may store station information into the storage unit 115 when the user performs an operation (hereinafter, referred to as a bookmark operation) for the operation unit 81 (Fig. 21) so as to request registration.

Thereby, a plurality of stations are displayed on the station list screen, and thereby it is possible to prevent difficulty in selecting a station desired by a user.

The storage unit 115 stores the station information supplied from the registration unit 114. In other words, the storage unit 115 stores a station list in which station information is registered, and registers the station information supplied from the registration unit 114 in the station list.

The update unit 116 updates the station information stored in the storage unit 115.

In other words, the station information includes, as illustrated in Fig. 14, the effective transmission start date which is the start date of the area limited broadcasting effective period which is a period of time when the station performs area limited broadcasting, and the effective transmission end date which is the end date thereof.

The update unit 116 deletes, from the storage unit 115, station information of which the area limited broadcasting effective period recognized from the effective transmission start date and the effective transmission end date of the station information stored in the storage unit 115 has elapsed.

Specifically, the update unit 116 periodically checks, for example, the effective transmission end date of the station information stored in the storage unit 115, and deletes station information of which the effective transmission end data is the past date in terms of the current time from the storage unit 115.

As described above, the update unit 116 updates station information stored in the storage unit 115, and thereby it is possible to prevent difficulty in selecting a station desired by a user due to display of a plurality of stations including stations which do not perform area limited broadcasting yet.

The station selection unit 117 selects a station of area limited broadcasting which can be received at a predetermined position using broadcasting area information of a broadcasting area which is included in station information stored in the storage unit 115 and can receive a broadcast wave from a station corresponding to the station information, as a tunable station which can be tuned, and supplies station information of the tunable station to the tuning control unit 118.

Here, as described with reference to Fig. 14, a set of the area name, a transmission station longitude, a transmission station latitude, and a transmission output is broadcasting area information.

The tuning control unit 118 performs tuning control such that the tuner 72 (Fig. 21) tunes area limited broadcasting of a station corresponding to station information using the station information supplied from the station information acquisition unit 111 or 112 or the station selection unit 117.

In addition, the tuning control unit 118 performs display control for controlling the selection unit 75 such that a station list screen on which the station name of the tunable station is displayed, a channel list screen on which the service name of area limited broadcasting (service) performed by the tunable station is displayed, or the like, is displayed on the display unit 76 (Fig. 21) using the station information of the tunable station supplied from the station selection unit 117.

[Process of acquiring station information by reception terminal 33]

Fig. 24 is a flowchart illustrating a process where the reception terminal 33 of Fig. 21 acquires station information through channel scanning and receives a service.

For example, if a user operates the operation unit 81 (Fig. 21) so as to display a scanning operation screen which is a menu screen of channel scanning, in step S101, the tuning control unit 118 (Fig. 23) controls the selection unit 75 (Fig. 21) such that the scanning operation screen is displayed on the display unit 76 (Fig. 21), and the process proceeds to step S102.

In step S102, the tuning control unit 118 determines whether or not a scanning button of the scanning operation screen is operated.

In other words, the scanning button operated when the channel scanning is performed is provided on the scanning operation screen, and, it is determined whether or not the scanning button is operated in step S102.

If it is determined that the scanning button is not operated in step S102, the process returns to step S102.

In addition, if it is determined that the scanning button is operated in step S102, the process proceeds to step S103 where the tuning control unit 118 makes the tuner 72 perform channel scanning so as to acquire station information.

In other words, if the scanning button is operated, the tuning control unit 118 performs tuning control for controlling the tuner 72 such that frequencies (preset frequencies) of central segments of the respective physical channels of the digital terrestrial broadcasting are sequentially tuned.

Here, in the tuning control of the tuner 72 by the tuning control unit 118, the tuner 72 may be controlled such that not frequencies of the central segments of the respective physical channels of the digital terrestrial broadcasting but frequencies of the respective segments of each physical channel are sequentially tuned.

The tuner 72 tunes a preset frequency under the tuning control of the tuning control unit 118, and supplies a TS to the demultiplexer 73 in a case where area limited broadcasting can be received at the tuned preset frequency, that is, the TS of the area limited broadcasting can be obtained.

The demultiplexer 73 separates PSI from the TS from the tuner 72 so as to be supplied to the controller 80.

In the above-described way, when channel scanning is performed, the controller 80 creates a tuning table in which tuning information of services (area limited broadcasting) which can be received at that time is registered, from an NIT and an SDT included in the PSI supplied from the demultiplexer 73 as necessary.

In addition, in the controller 80, the station information acquisition unit 111 acquires station information from the NIT obtained through the channel scanning.

In addition, although a frequency (entry frequency) at which a station corresponding to the station information acquired from the NIT performs area limited broadcasting can be recognized from the NIT including the station information, here, for simplicity of description, it is assumed that an entry frequency is included in the station information.

In step S103, the station information acquisition unit 111 acquires the station information in the above-described way, and supplies the station information to the registration unit 114 and the tuning control unit 118, and the process proceeds to step S104.

In step S104, the tuning control unit 118 generates a channel list screen on which the service name of a service performed as area limited broadcasting in a station corresponding to the station information is displayed using the station information from the station information acquisition unit 111, so as to be displayed on the display unit 76 via the selection unit 75.

Here, the service name of a service of which area limited broadcasting is performed in a station corresponding to certain station information may be recognized from an SDT on the basis of a service ID included in an NIT including the station information.

Thereafter, the process proceeds to step S105 from step S104, and the tuning control unit 118 determines whether or not the operation unit 81 is operated so as to select any one of the service names (logical channels) displayed on the channel list screen.

If it is determined that the operation unit 81 is not operated so as to select any one of the service names displayed on the channel list screen in step S105, the process returns to step S105.

In addition, if it is determined that the operation unit 81 is operated so as to select any one of the service names displayed on the channel list screen in step S105, the process proceeds to step S106 where the tuning control unit 118 performs tuning control such that a selected service (logical channel) (segment) which is a service of the service name selected through the operation of the operation unit 81 is tuned.

In other words, since a frequency of the service performed by the station is included in an NIT which is transmitted with a segment (representative segment) of an entry frequency (Fig. 14) included in station information of the station performing area limited broadcasting of the selected service, the tuning control unit 118 recognizes the frequency of the selected service (of which area limited broadcasting is performed) from the NIT (or, when possible, a tuning table which has already been created)

In addition, the tuning control unit 118 controls the tuner 72 (Fig. 21) such that a frequency of the selected service is tuned.

The tuner 72 tunes a frequency of the selected service in response to the tuning control of the tuning control unit 118, and supplies a TS to the demultiplexer 73 (Fig. 21) in a case where area limited broadcasting can be received, that is, as a result of the tuning, the TS of the area limited broadcasting can be obtained.

The demultiplexer 73 divides video data, audio data, and display control information from the TS from the tuner 72 so as to be respectively supplied to the video decoder 74, the audio decoder 77, and the browser 79.

Thereby, for example, an image of the selected service is displayed on the display unit 76, sound of the selected service is output from the speaker 78, and thereby the user can view the selected service.

Thereafter, the process proceeds from the step S106 to step S107, and the registration unit 114 determines whether or not the user performs a bookmark operation.

In other words, the tuning control unit 118 also displays a bookmark button on the display unit 76 via the selection unit 75 when an image of the selected service is displayed on the display unit 76.

The registration unit 114 determines whether or not a bookmark operation for operating the bookmark button is performed in step S107.

If it is determined that the bookmark operation is performed in step S107, the process proceeds to step S108, where the registration unit 114 registers station information of a station performing area limited broadcasting of the selected service of pieces of station information from the station information acquisition unit 111 into the station list of the storage unit 115, and finishes the process.

In addition, if it is determined that the bookmark operation is not performed in step S107, the process skips step S108 and is finished.

Therefore, the station information of a station performing area limited broadcasting of the selected service, acquired by the station information acquisition unit 111, is registered in the station list of the storage unit 115 only in a case where the bookmark operation is performed.

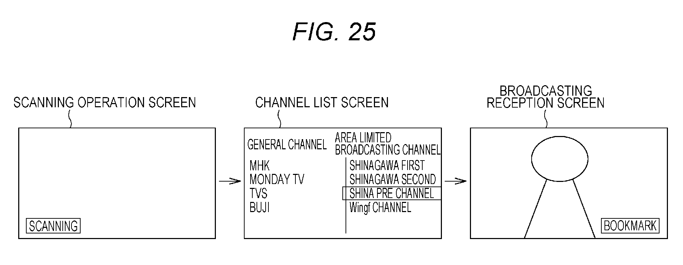

Fig. 25 is a diagram illustrating a display example of the display unit 76 in a case where the reception terminal 33 of Fig. 21 acquires station information through channel scanning and receives a service.

As described with reference to Fig. 24, if a user operates the operation unit 81 (Fig. 21) so as to display the scanning operation screen, the scanning operation screen with the scanning button is displayed on the display unit 76 in the reception terminal 33.

If the user operates the scanning button of the scanning operation screen displayed on the display unit 76, channel scanning is performed in the reception terminal 33.

In addition, in the reception terminal 33, the station information acquisition unit 111 acquires station information from an NIT obtained when the channel scanning is performed.

Further, in the reception terminal 33, the tuning control unit 118 generates a channel list screen on which the service name of a service performed as area limited broadcasting in a station corresponding to the station information acquired by the station information acquisition unit 111, so as to be displayed on the display unit 76.

Thereafter, if the user selects any one service name (logical channel) displayed on the channel list screen, the tuner 72 sets a service of the service name as a selected service and tunes the selected service in the reception terminal 33.

In addition, in the reception terminal 33, as a result of the tuning by the tuner 72, a broadcasting reception screen on which an image of the selected service where a TS can be received is displayed is displayed on the display unit 76.

The bookmark button is further displayed on the broadcasting reception screen. If the bookmark button is operated, in the reception terminal 33, the registration unit 114 registers station information of a station performing area limited broadcasting of the selected service of pieces of station information from the station information acquisition unit 111 into the station list of the storage unit 115.

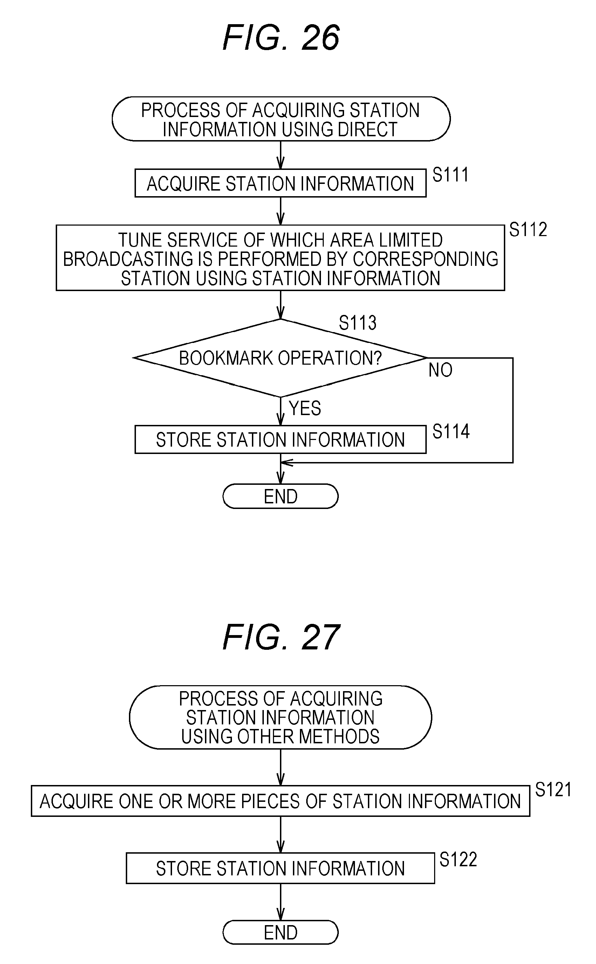

Fig. 26 is a flowchart illustrating a process where the reception terminal 33 of Fig. 21 acquires station information using the direct method and receives a service.

For example, if the user operates the operation unit 81 so as to acquire station information using the direct method, and, for example, makes the reception terminal 33 come close to a bar code of a poster where station information of a predetermined station is printed in a form of the bar code, the station information acquisition unit 112 (Fig. 23) acquires the station information by reading the bar code in step S111, so as to be supplied to the registration unit 114 and the tuning control unit 118, and the process proceeds to step S112.

In step S112, the tuning control unit 118 performs tuning control so as to tune a service of which area limited broadcasting is performed at an entry frequency of the station information using the station information from the station information acquisition unit 112.

In other words, the tuning control unit 118 controls the tuner 72 (Fig. 21) so as to tune the entry frequency of the station information from the station information acquisition unit 112.

The tuner 72 tunes the entry frequency in response to the tuning control of the tuning control unit 118, and supplies a TS to the demultiplexer 73 in a case where area limited broadcasting can be received at the entry frequency, that is, as a result of the tuning, the TS of the area limited broadcasting can be obtained.

The demultiplexer 73 divides video data, audio data, and display control information from the TS from the tuner 72 so as to be respectively supplied to the video decoder 74, the audio decoder 77, and the browser 79.

Thereby, an image of a service (hereinafter, also referred to as a direct acquisition service) of which area limited broadcasting is performed at the entry frequency of the station information acquired by the station information acquisition unit 112 is displayed on the display unit 76, sound of the direct acquisition service is output from the speaker 78, and thereby the user can view the direct acquisition service.

Thereafter, the process proceeds from the step S112 to step S113, and the registration unit 114 determines whether or not the user performs a bookmark operation.

In other words, the tuning control unit 118 also displays a bookmark button on the display unit 76 via the selection unit 75 when an image (broadcasting reception screen) of the direct acquisition service is displayed on the display unit 76 in the same manner as the case illustrated in Fig. 25.

The registration unit 114 determines whether or not a bookmark operation for operating the bookmark button is performed in step S113.

If it is determined that the bookmark operation is performed in step S113, the process proceeds to step S114, where the registration unit 114 registers station information from the station information acquisition unit 112, that is, station information of a station performing area limited broadcasting of the direct acquisition service into the station list of the storage unit 115, and finishes the process.

In addition, if it is determined that the bookmark operation is not performed in step S113, the process skips step S114 and is finished.

Therefore, the station information acquired by the station information acquisition unit 112 is registered in the station list of the storage unit 115 only in a case where the bookmark operation is performed.

Fig. 27 is a flowchart illustrating a process where the reception terminal 33 of Fig. 21 acquires station information using other methods.

In step S121, the station information acquisition unit 113 (Fig. 23) acquires station information using other methods as described with reference to Fig. 23 so as to be supplied to the registration unit 114, and the process proceeds to step S122.

In step S122, the registration unit 114 registers all the pieces of station information from the station information acquisition unit 113 into the station list of the storage unit 115, and finishes the process.

Therefore, all the pieces of the station information acquired by the station information acquisition unit 113 is registered in the station list of the storage unit 115.

[Tuning process using station information]

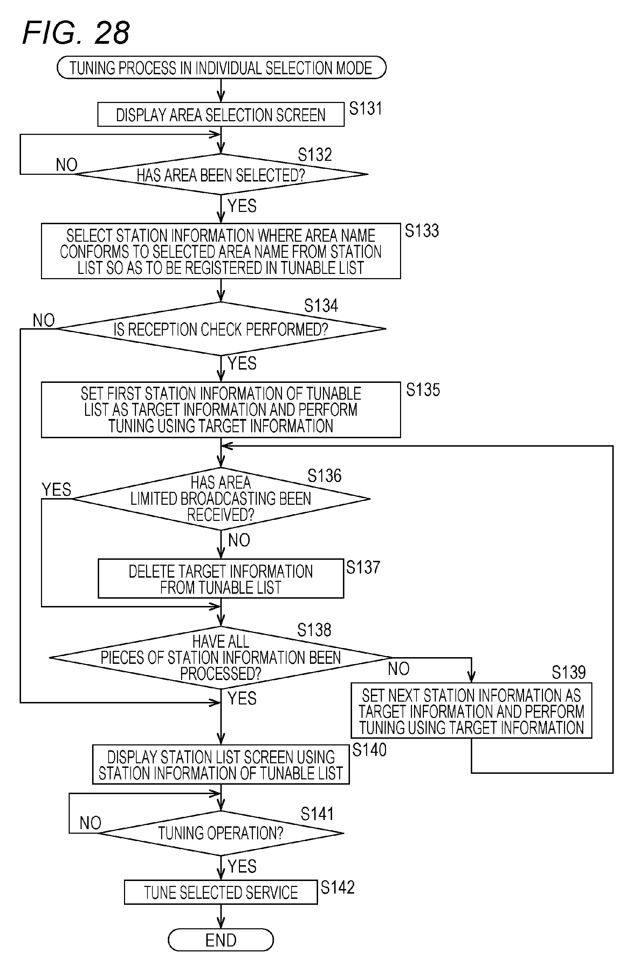

Fig. 28 is a flowchart illustrating a tuning process of performing tuning by using station information in the reception terminal 33.

Here, tuning process modes includes an individual selection mode, a sequential selection mode, a map display mode, and a GPS mode, and the flowchart of Fig. 28 illustrates a tuning process in the individual selection mode.

In addition, which mode a tuning process is performed in may be selected, for example, by the user operating the operation unit 81.

In step S131, the tuning control unit 118 generates an area selection screen which is displayed on the display unit 76.

In other words, the station selection unit 117 sequentially selects station information registered in the station list of the storage unit 115 as target station information which is targeted, and selects the area name (Fig. 14) of the target station information as a display area name which is displayed on the area selection screen.

In addition, the station selection unit 117 does not select an area name which conforms to an area name which has already been selected as a display area name, as a display area name.

If display area names are selected by setting all the pieces of station information registered in the station list of the storage unit 115 as target station information, the station selection unit 117 supplies a list of the display area names to the tuning control unit 118.

The tuning control unit 118 generates an area selection screen on which the list of the display area names from the station selection unit 117 so as to be displayed on the display unit 76.

In step S131, if the area selection screen is displayed, the process proceeds to step S132, where the station selection unit 117 determines whether or not an area name as any one of display area names which is displayed on the area selection screen is selected by the user operating the operation unit 81.

Here, in a case where a plurality of display area names are displayed on the area selection screen, there are cases where it is difficult for the user to select a desired display area name.

Therefore, display area names displayed on the area selection screen may be restricted.

That is to say, in a case where the station selection unit 117 has a function of acquiring a present location such as a GPS (Global Positioning System), the station selection unit 117 supplies only display area names of areas close to the present location to the tuning control unit 118, and thereby display area names displayed on the area selection screen can be restricted to only display area names of areas close to the present location.

If it is determined that none of display area names displayed on the area selection screen is selected in step S132, the process returns to step S132.

In addition, if it is determined that any one of display area names displayed on the area selection screen is selected in step S132, the process proceeds to step S133, where the station selection unit 117 sets the display area name selected from the area selection screen as a selected area name and selects station information of which an area name conforms to the selected area name from station information registered in the station list of the storage unit 115.

In addition, the station selection unit 117 registers the station information of which an area name conforms to the selected area name and which is selected from the station information registered in the station list of the storage unit 115, into a tunable list in which station information of a tunable station is registered, so as to be supplied to the tuning control unit 118, and the process proceeds to step S134.

In step S134, the tuning control unit 118 determines whether or not reception check of a station of which the station information is registered in the tunable list from the station selection unit 117, that is, (area limited broadcasting by) a tunable station is performed.

Here, the reception check of the tunable station is to check that area limited broadcasting (service) by the tunable station is actually received, that is, a TS of the area limited broadcasting can be obtained when the area limited broadcasting by the tunable station is tuned.

Whether or not the reception check is performed may be set, for example, by operating the operation unit 81.

If it is determined that the reception check is not performed in step S134, the process skips steps S135 to S139 so as not to perform the reception check, and the process proceeds to step S140.

Further, if it is determined that the reception check is performed in step S134, the process proceeds to step S135, and, the reception check is performed in steps S135 to S139 in the following.

In other words, in step S135, the tuning control unit 118 selects first station information of the tunable list from the station selection unit 117 as target station information (hereinafter, also referred to as target information).

Further, in step S135, the tuning control unit 118 performs tuning control for controlling the tuner 72 such that a service of which area limited broadcasting is performed at an entry frequency of the target station information is tuned by the use of the target station information.

Thereafter, the process proceeds from step S135 to step S136, and the tuning control unit 118 determines whether or not the service of which area limited broadcasting is performed at the entry frequency of the target station information can be received, that is, as a result of the tuning, a TS can be obtained in the tuner 72.

If it is determined that the service of which area limited broadcasting is performed at the entry frequency of the target station information cannot be received in step S136, the process proceeds to step S137, where the tuning control unit 118 deletes the target station information from the tunable list, and the process proceeds to step S138.

In other words, for example, in a case where the present location is in a broadcasting area of a target station which is a station corresponding to the target station information, but a TS of the service of area limited broadcasting by the target station cannot be received for a reason such as there being an obstacle such as a building between the target station and the present location, or the present location being too distant from the target station, the tuning control unit 118 deletes the target station information from the tunable list, and thereby excludes the target station from the tunable stations.

On the other hand, if it is determined that the service of which area limited broadcasting is performed at the entry frequency of the target station information can be received in step S136, the process skips step S137 and proceeds to step S138 where the tuning control unit 118 determines whether or not all the pieces of station information of the tunable list has been target station information.

If it is determined that there is station information which has not been target station information yet of the pieces of station information of the tunable list in step S138, the process proceeds to step S139, where the tuning control unit 118 selects the next station information of station information which is currently target station information as new target station information of the pieces of station information of the tunable list.

In addition, in step S139, the tuning control unit 118 performs tuning control for controlling the tuner 72 such that a service of which area limited broadcasting is performed at an entry frequency of the target station information is tuned using the target station information, and the process returns to step S136.

Further, if it is determined that all the pieces of station information of the tunable list has been target station information in step S138, that is, reception check for all the pieces of station information of the tunable list is completed, the process proceeds to step S140, where the tuning control unit 118 generates a station list screen which is displayed on the display unit 76.

In other words, in step S140, the tuning control unit 118 recognizes station names (Fig. 14) of the tunable stations from the station information of the tunable list.

In addition, the tuning control unit 118 generates a station list screen which is a list displaying a list of the station names of the tunable stations so as to be displayed on the display unit 76, and the process proceeds from step S140 to step S141.

The tuning control unit 118 determines whether or not the user performs a tuning operation in step S141, and if it is determined that the tuning operation is not performed, the process returns to step S141.

Here, the tuning operation is an operation of selecting a station and selecting a service of which area limited broadcasting is performed by the station.

That is to say, the user may select a station name of a desired station (tunable station) of the station names displayed on the station list screen by operating the operation unit 81.

If the user selects any one of the station names displayed on the station list screen, the tuning control unit 118 recognizes frequencies and service names of one or more services of which area limited broadcasting is performed by a selected station, from an NIT and an SDT (or, when possible, a tuning table which has already been created) transmitted with a segment (representative segment) of an entry frequency (Fig. 14) of station information of the selected station which is a station (tunable station) of which the station name is selected by the user.

In addition, the tuning control unit 118 generates a channel list screen on which the service names of one more services of which area limited broadcasting is performed by the selected station, so as to be displayed on the display unit 76.

The user may select a service name of a desired service of the service names displayed on the channel list screen by operating the operation unit 81.

If the user selects any one of the service names displayed on the channel list screen, the tuning control unit 118 performs tuning control such that the tuner 72 tunes a selected service (logical channel) (service) which is a service of which the service name is selected by the user.

Thereby, for example, as described in step S106 of Fig. 24, an image of the selected service is displayed on the display unit 76, and sound of the selected service is output from the speaker 78.

In step S141, as described above, it is determined whether or not a tuning operation is performed in which a station name of a selected station is selected from the station names displayed on the station list screen, and a service name of a selected service is selected from the service names of services, displayed on the channel list screen, of which area limited broadcasting is performed by the selected station.

If it is determined that the tuning operation is performed in step S141, that is, a station is selected as a selected station from the station list screen, and a service is selected as a selected service from the channel list screen on which service names of one or more services of which area limited broadcasting is performed by the selected station are displayed, the process proceeds to step S142, where the tuning control unit 118 performs tuning control such that the tuner 72 tunes the selected service, and the tuning process in an individual selection mode finishes.

As described above, in the reception terminal 33, the station information acquisition units 111 to 113 acquire station information, and the storage unit 115 stores the station information.

In addition, in the station selection unit 117, a station having an area name conforming to a display area name selected by the user by using area names which are broadcasting area information included in the station information stored in the storage unit 115, that is, a station which performs area limited broadcasting which can be received at a position of the display area name selected by the user is selected as a tunable station which can be tuned, and a station name thereof is registered in the tunable list.

In addition, in the tuning control unit 118, the station list screen on which station names registered in the tunable list are displayed is displayed as information of tunable stations, and tuning control is performed for a service (selected service) of which area limited broadcasting is performed by a tunable station which is selected from the station list screen and the channel list screen by the user.

Therefore, in the reception terminal 33, after station information is acquired, it is possible to rapidly present area limited broadcasting (service) which can be received at a position of a display area name selected by the user in a form of a station list screen and a channel list screen.

In addition, if reception check is not performed, there are cases where a service of which area limited broadcasting is performed by a tunable station selected by the user from the station list screen and the channel list screen cannot be received.

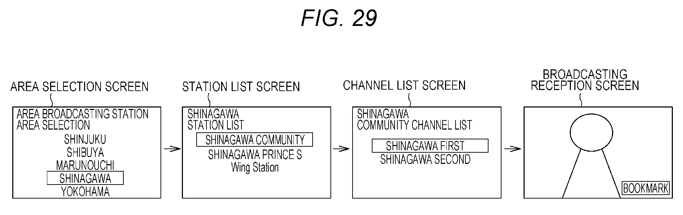

Fig. 29 is a diagram illustrating a display example of the display unit 76 in a case where a tuning process in an individual selection mode is performed in the reception terminal 33 of Fig. 21.

In the individual selection mode, as described with reference to Fig. 28, the area selection screen on which area names of station information are displayed as display area names is displayed on the display unit 76.

If the user selects any one of the display area names displayed on the area selection screen, a station list screen on which a station name of a tunable station is displayed by setting, as the tunable station, a station corresponding to station information where an area name of the station information registered in the station list of the storage unit 115 conforms to a selected area name which is the display area name selected from the area selection screen, is displayed on the display unit 76.

Here, in Fig. 29, display area names, "Shinjuku", "Shibuya", "Marunouchi", "Shinagawa", and "Yokohama" are displayed on the area selection screen, and "Shinagawa" is selected of the display area names.

In addition, in Fig. 29, as stations of which the area name of the station information is "Shinagawa", there are three stations of which station names are "Shinagawa Community", "Shinagawa Prince S", and "Wing Station", and, the station names, "Shinagawa Community", "Shinagawa Prince S", and "Wing Station" are displayed on the station list screen.

If the user selects any one of the station names displayed on the station list screen, a channel list screen on which service names of one or more services of which area limited broadcasting is performed by a selected station which is the station (tunable station) of which the station name is selected by the user are displayed is displayed on the display unit 76.

Here, in Fig. 29, the station name "Shinagawa Community" is selected.

In addition, the station name "Shinagawa Community" performs area limited broadcasting of two services of which service names are "Shinagawa First" and "Shinagawa Second", and the service names, "Shinagawa First" and "Shinagawa Second" are displayed on the channel list screen.

If the user selects a service name of a desired service of the service names displayed on the channel list screen, a selected service which is the service of which the service name is selected is received in the tuner 72, and a broadcasting reception screen on which images of the selected service are displayed is displayed on the display unit 76.

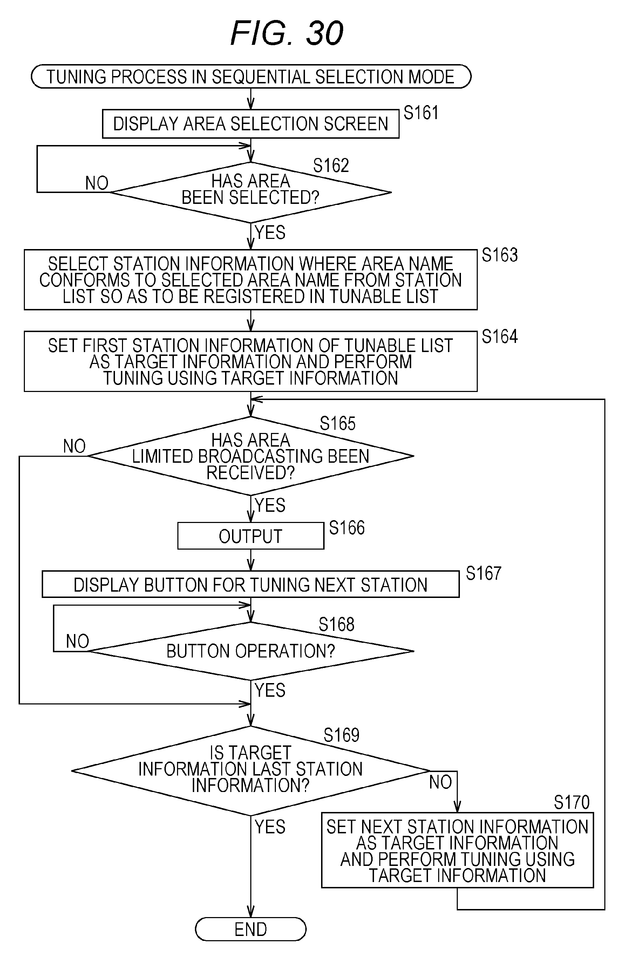

Fig. 30 is a flowchart illustrating a tuning process in a sequential selection mode of the tuning processes of performing tuning by using station information in the reception terminal 33.

In the tuning process in a sequential selection mode, the same processes as in steps S131 to S133 of Fig. 28 are respectively performed in steps S161 to S163.

In other words, if the area selection screen is displayed on the display unit 76, and an area name is selected as any one of the display area names displayed on the area selection screen, the display area name selected from the area selection screen is set as a selected area name, and station information where an area name conforms to the selected area name is selected as station information of a tunable station from the station information registered in the station list of the storage unit 115 and is registered in the tunable list.

Thereafter, in step S164, the tuning control unit 118 selects first station information of the tunable list as target station information.

Further, in step S164, the tuning control unit 118 performs tuning control for controlling the tuner 72 such that a service of which area limited broadcasting is performed at an entry frequency of the target station information is tuned by the use of the target station information, and the process proceeds to step S165.

In step S165, the tuning control unit 118 determines whether or not the service of which area limited broadcasting is performed at the entry frequency of the target station information can be received, that is, as a result of the tuning, a TS can be obtained in the tuner 72.

If it is determined that the service of which area limited broadcasting is performed at the entry frequency of the target station information cannot be received in step S165, the process skips steps S166 to S168, and the process proceeds to step S169.

In addition, if it is determined that the service of which area limited broadcasting is performed at the entry frequency of the target station information can be received in step S165, the process proceeds to step S166 where the tuning control unit 118 outputs the service of which area limited broadcasting is performed at the entry frequency of the target station information from the display unit 76 and the speaker 78.

In other words, the tuning control unit 118 displays an image of the service of which a TS can be obtained by the tuner 72 on the display unit 76 and outputs sound of the service from the speaker 78.

Thereafter, the process proceeds from step S166 to step S167, and the tuning control unit 118 displays a "Next ch" button for tuning a service of which area limited broadcasting is performed by a station corresponding to the next station information of the tunable list on the display unit 76 in addition to an image of the service of which area limited broadcasting is performed at the entry frequency of the target station information, and the process proceeds to step S168.

In step S168, the tuning control unit 118 determines whether or not the "Next ch" button is operated, and if it is determined that it is not operated, the process returns to step S168.

In addition, if it is determined that the "Next ch" button is operated in step S168, the process proceeds to step S169 where the tuning control unit 118 determines whether or not all the pieces of station information of the tunable list has been target station information.

If it is determined that there is station information which has not been target station information yet of the pieces of station information of the tunable list in step S169, the process proceeds to step S170, where the tuning control unit 118 selects the next station information of station information which is currently target station information as new target station information of the pieces of station information of the tunable list.

In addition, in step S170, the tuning control unit 118 performs tuning control for controlling the tuner 72 such that a service of which area limited broadcasting is performed at an entry frequency of the target station information is tuned using the target station information, and the process returns to step S165.

Further, if it is determined that all the pieces of station information of the tunable list has been target station information in step S169, the tuning process in a sequential selection mode finishes.

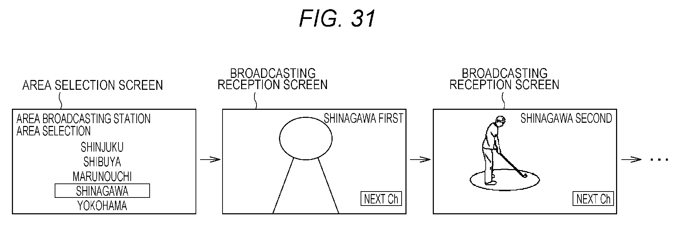

Fig. 31 is a diagram illustrating a display example of the display unit 76 in a case where a tuning process in a sequential selection mode is performed in the reception terminal 33 of Fig. 21.

In the sequential selection mode, as described with reference to Fig. 30, the area selection screen on which area names of station information are displayed as display area names are displayed is displayed on the display unit 76.

If the user selects any one of the display area names displayed on the area selection screen, a station corresponding to station information where an area name of the station information registered in the station list of the storage unit 115 conforms to a selected area name which is the display area name selected from the area selection screen is set as a tunable station, and station information of the tunable station is registered in the tunable list.

In addition, first station information of the tunable list is selected as target station information, and a service of which area limited broadcasting is performed at an entry frequency of the target station information is tuned.

In a case where, as a result of the tuning, a TS of the service of which area limited broadcasting is performed at the entry frequency of the target station information can be obtained, a broadcasting reception screen on which images of the service are displayed is displayed on the display unit 76, and sound of the service is output from the speaker 78.

In addition, the "Next ch" button is displayed on the broadcasting reception screen.

If the user operates the "Next ch" button, the next station information of station information which is currently target station information is selected as new target station information of the pieces of station information of the tunable list, and a service of which area limited broadcasting is performed at an entry frequency of the target station information is tuned.

In a case where, as a result of the tuning, a TS of the service of which area limited broadcasting is performed at the entry frequency of the target station information can be obtained, a broadcasting reception screen on which images of the service are displayed is displayed on the display unit 76, and sound of the service is output from the speaker 78.

In addition, in the same manner as described above, the "Next ch" button is displayed on the broadcasting reception screen, and, in the same manner in the following, services of which area limited broadcasting is performed by tunable stations of which station information is registered in the tunable list are sequentially tuned each time the "Next ch" button is operated.

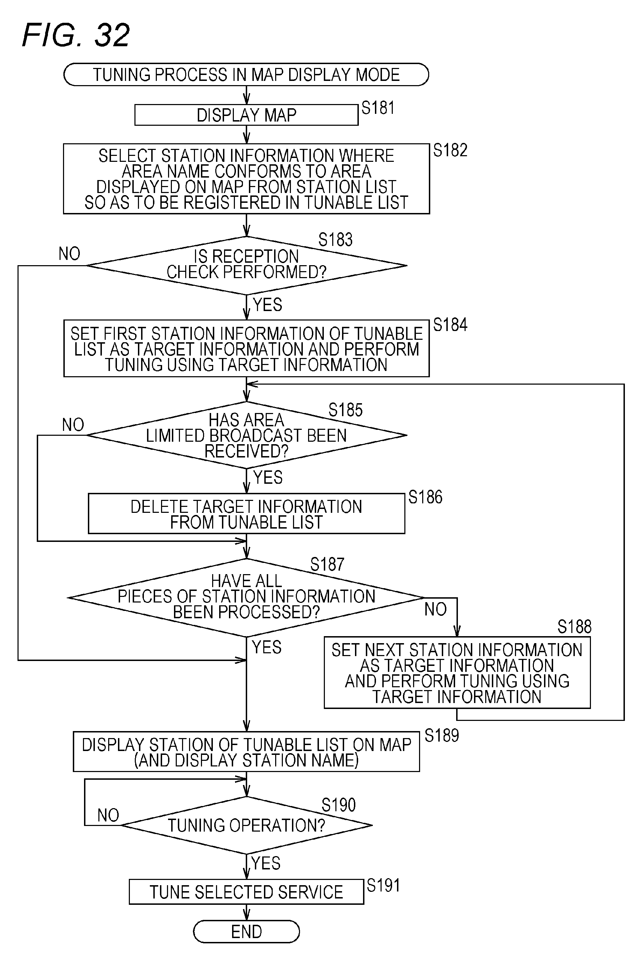

Fig. 32 is a flowchart illustrating a tuning process in a map display mode of the tuning processes of performing tuning by using station information in the reception terminal 33.

In step S181, the tuning control unit 118 displays a map on the display unit 76 in response to an operation of the user, and the process proceeds to step S182.

In other words, the tuning control unit 118 has a built-in memory storing map data, and, for example, if the user operates the operation unit 81 so as to display a map of a predetermined area, the map of the predetermined area is displayed on the display unit 76 in response to the operation.

In step S182, the station selection unit 117 sets the name of the area included in the map displayed on the display unit 76 as a target area name which is targeted, and selects station information where an area name conforms to the target area name from the station information registered in the station list of the storage unit 115.

In addition, the station selection unit 117 registers the station information of which an area name conforms to the target area name and which is selected from the station information registered in the station list of the storage unit 115, into a tunable list in which station information of a tunable station is registered, so as to be supplied to the tuning control unit 118, and the process proceeds to step S183.

In step S183, the tuning control unit 118 determines whether or not reception check is performed in the same manner as the case of step S134 of Fig. 28.

If it is determined that the reception check is not performed in step S183, the process skips steps S184 to S188 so as not to perform the reception check, and the process proceeds to step S189.

Further, if it is determined that the reception check is performed in step S183, the process proceeds to step S184, and, the reception check is performed in steps S184 to S188 in the following by performing the same processes as in steps S135 to S139 of Fig. 28.

In addition, if, in steps S184 to S188, the reception check is completed, in step S189, in relation to a tunable station which is a station of which station information is registered in the tunable list, the tuning control unit 118 displays a mark indicating the tunable list at a position of the tunable list indicated by the transmission station longitude and the transmission station latitude of the station information of the tunable station on the map of the display unit 76.

Further, in addition to the map and the mark indicating the tunable station, a station name of the tunable station may be displayed on the display unit 76.

Thereafter, the process proceeds from step S189 to step S190, where the tuning control unit 118 determines whether or not a tuning operation is performed in which the user selects a station and selects a service of which area limited broadcasting is performed by the station, and if it is determined that it is not performed, the process returns to step S190.

In other words, the user may select a desired station (tunable station) among stations of which a mark or a station name is displayed on the map of the display unit 76 by operating the operation unit 81.

If the user selects a desired station among stations of which a mark or a station name is displayed on the map of the display unit 76, the tuning control unit 118 recognizes frequencies and service names of one or more services of which area limited broadcasting is performed by a selected station, from an NIT and an SDT (or, when possible, a tuning table which has already been created) transmitted with a segment (representative segment) of an entry frequency (Fig. 14) of station information of the selected station which is a station (tunable station) of which the station name is selected by the user.

In addition, the tuning control unit 118 generates a channel list screen on which the service names of one more services of which area limited broadcasting is performed by the selected station, so as to be displayed on the display unit 76.

The user may select a service name of a desired service of the service names displayed on the channel list screen by operating the operation unit 81.

If the user selects any one of the service names displayed on the channel list screen, the tuning control unit 118 performs tuning control such that the tuner 72 tunes a selected service (logical channel) (service) which is a service of which the service name is selected by the user.

Thereby, for example, as described in step S106 of Fig. 24, an image of the selected service is displayed on the display unit 76, and sound of the selected service is output from the speaker 78.

In step S190, as described above, it is determined whether or not a tuning operation is performed in which a selected station is selected from the map, and a selected service is selected from services, displayed on the channel list screen, of which area limited broadcasting is performed by the selected station.

If it is determined that the tuning operation is performed in step S190, that is, a station is selected as a selected station from the station list screen, and a service is selected as a selected service from the channel list screen on which service names of one or more services of which area limited broadcasting is performed by the selected station are displayed, the process proceeds to step S191, where the tuning control unit 118 performs tuning control such that the tuner 72 tunes the selected service, and the tuning process in a map display mode finishes.

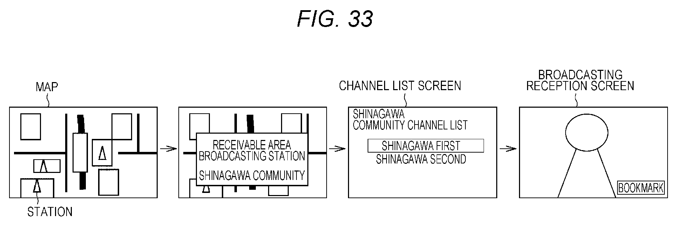

Fig. 33 is a diagram illustrating a display example of the display unit 76 in a case where a tuning process in a map display mode is performed in the reception terminal 33 of Fig. 21.

In the map display mode, as described with reference to Fig. 32, the map is displayed on the display unit 76.

In addition, in the map display mode, a mark (a triangular mark in Fig. 33) indicating a tunable station is displayed at a position of the tunable station on the map o the display unit 76.

If the user performs an operation such as so-called focusing on any one mark indicating the tunable station, a station name ("Shinagawa Community" in Fig. 33) of the tunable station corresponding to the mark is displayed, for example, in a form superimposed on the map in the display unit 76.

In addition, if the user selects any one of the tunable stations of which the marks are displayed on the map, a channel list screen on which service names of one or more services of which area limited broadcasting is performed by a selected station which is the tunable station selected by the user are displayed is displayed on the display unit 76.

If the user selects a service name of a desired service of the service names displayed on the channel list screen, a selected service which is the service of which the service name is selected is received in the tuner 72, and a broadcasting reception screen on which images of the selected service are displayed is displayed on the display unit 76.

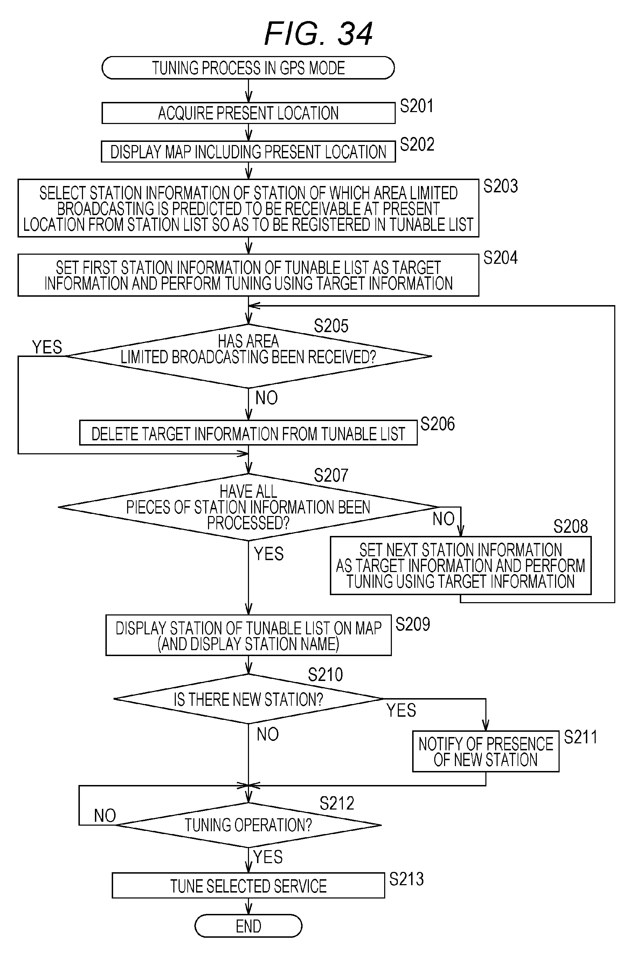

Fig. 34 is a flowchart illustrating a tuning process in a GPS mode of the tuning processes of performing tuning by using station information in the reception terminal 33.

In addition, in a case where the tuning process in a GPS mode is performed, the station selection unit 117 is assumed to have a function of acquiring a present location such as, for example, GPS.

In step S201, the station selection unit 117 acquires a present location (of the reception terminal 33) which is supplied to the tuning control unit 118, and the process proceeds to step S202.

In step S202, the tuning control unit 118 displays a map including the present location from the station selection unit 117 on the display unit 76, and the process proceeds to step S203.

In other words, the tuning control unit 118 has a built-in memory storing map data, and displays a map in a predetermined range including the present location from the station selection unit 117 on the display unit 76.

In step S203, the station selection unit 117 selects station information of a station performing area limited broadcasting which is predicted to be capable of being received at the present location from the station information registered in the station list of the storage unit 115.

That is to say, the station selection unit 117 sequentially selects stations of which station information is registered in the station list of the storage unit 115 as target stations which are targeted.

In addition, the station selection unit 117 obtains an area of a circle with the radius proportional to an transmission output with respect to a position (of the target station) specified by a transmission station longitude and a transmission station latitude as a broadcasting area of the target station on the basis of the transmission output, the transmission station longitude, and the transmission station latitude of the station information of the target station.

In addition, in a case where the broadcasting area of the target station includes the present location, the station selection unit 117 regards the target station as a station performing area limited broadcasting which is predicted to be capable of being received at the present location, and selects station information thereof from the station information registered in the station list of the storage unit 115.

Further, the station selection unit 117 sets the station selected from the station information registered in the station list of the storage unit 115 as a tunable station, and registers station information of the tunable station into the tunable list so as to be supplied to the tuning control unit 118.

Thereafter, the process proceeds from step S203 to step S204, and, the reception check is performed in steps S204 to S208 in the following by performing the same processes as in steps S135 to S139 of Fig. 28.

In addition, if, in steps S204 to S208, the reception check is completed, in step S209, in the same manner as the case of step S189 of Fig. 32, the tuning control unit 118 displays a mark indicating the tunable list at a position of the tunable list indicated by the transmission station longitude and the transmission station latitude of the station information of the tunable station on the map of the display unit 76.

Thereafter, the process proceeds from step S209 to step S210 where the tuning control unit 118 determines whether or not a mark indicating a new station which has not been displayed when the previous tuning process in a GPS mode is performed is displayed on the map of the display unit 76.

If it is determined that a mark indicating a new station is not displayed on the map of the display unit 76 in step S210, the process skips step S211 and proceeds to step S212.

In addition, if it is determined that a mark indicating a new station is displayed on the map of the display unit 76 in step S210, that is, the user carrying the reception terminal 33 moves and thereby the present location is varied, and, as a result, the present location is included in a broadcasting area of the new station, the process proceeds to step S211, where the tuning control unit 118, for example, highlights and displays the mark indicating the new station on the map of the display unit 76, or outputs a beep sound or the like from the speaker 78, thereby notifying the user of the presence of the new station, and the process proceeds to step S212.

In steps S212 and S213, the same processes as in steps S190 and S191 of Fig. 32 are respectively performed, and the tuning process in a GPS mode finishes.

In addition, in the tuning process in a GPS mode, described with reference to Fig. 33, the same display as in the case of performing the tuning process in a map display mode is performed on the display unit 76.

In addition, in a selection process in the GPS mode, a map is not displayed but only a station list screen (Fig. 29) on which station names of tunable stations are displayed may be displayed.

[Description of computer to which the present invention is applied]

The above-described series of processes of the station 32 and the reception terminal 33 may be executed by hardware or may be executed by software. In a case where the above-described series of processes is executed by software, a program constituting the software is installed in a computer. Here, the computer includes a computer incorporated into dedicated hardware, or, a general purpose personal computer which can execute various functions by installing a variety of programs therein.

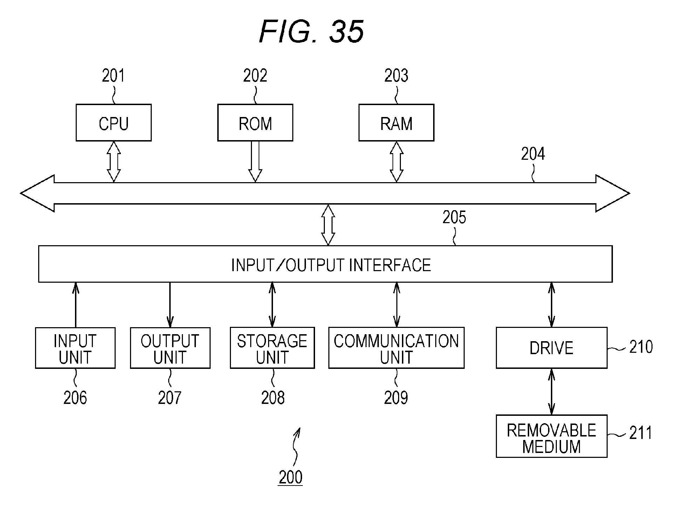

Fig. 35 is a block diagram illustrating a hardware configuration example of the computer which executes the above-described series of processes according to a program.

In the personal computer 200, a CPU (Central Processing Unit) 201, a ROM (Read Only Memory) 202, a RAM (Random Access Memory) 203 are connected to each other via a bus 204.

The bus 204 is further connected to an input/output interface 205. The input/output interface 205 is connected to an input unit 206, an output unit 207, a storage unit 208, a communication unit 209, and a drive 210.

The input unit 206 includes a keyboard, a mouse, a microphone, and the like. The output unit 207 includes a display, a speaker, and the like. The storage unit 208 includes a hard disk, a nonvolatile memory, or the like. The communication unit 209 includes a network interface and the like. The drive 210 drives a removable medium 211 such as a magnetic disk, an optical disc, a magneto-optical disc, or a semiconductor memory.

In the personal computer 200 configured in this way, the CPU 201 loads a program stored in, for example, the storage unit 208 to the RAM 203 via the input/output interface 205 and the bus 204 so as to be executed, and thereby the above-described series of processes is performed.

The program executed by the personal computer 200 (CPU 201) may be recorded on the removable medium 211 such as, for example, a package medium and be provided. In addition, the program may be provided via a wired or wireless transmission medium such as a local area network, the Internet, or digital satellite broadcasting.

In the personal computer 200, the program may be installed in the storage unit 208 via the input/output interface 205 by mounting the removable medium 211 in the drive 210. In addition, the program may be received by the communication unit 209 via a wired or wireless transmission medium and be installed in the storage unit 208. Further, the program may be installed in the ROM 202 or the storage unit 208 in advance.

In addition, the program executed by the computer may be a program which performs the processes in a time series according to the order described in the present specification, or may be a program which performs the processes in parallel or at necessary timing such as being accessed.

Further, embodiments of the present invention are not limited to the above-described embodiments, and various modifications are possible in the scope without departing from the spirit of the present invention.

That is to say, in the station selection unit 117 (Fig. 23), station information of which the current time is not included in the area limited broadcasting effective period which can be recognized from the station information may be deleted from a tunable list.

In addition, area limited broadcasting may be performed for passengers, for example, using inside of a train, a bus, or the like, as a broadcasting area.

In this case, as broadcasting area information, for example, information for specifying a train, a bus, or the like is employed instead of an area name, or a set of a transmission station longitude, a transmission station latitude, and a transmission output. In addition, it is necessary to acquire information indicating whether or not a present location is inside a train, a bus, or the like specified by the broadcasting area information.

### REFERENCE SIGNS LIST

- 31: TERRESTRIAL BROADCASTING STATION
- 32-1 TO 32-3: STATION
- 33: RECEPTION TERMINAL
- 51: RELATED INFORMATION ACQUISITION UNIT
- 52: VIDEO DATA ACQUISITION UNIT
- 53: VIDEO ENCODER
- 54: AUDIO DATA ACQUISITION UNIT
- 55: AUDIO ENCODER
- 56: MULTIPLEXER
- 57: TRANSMISSION UNIT
- 58, 71: ANTENNA
- 72: TUNER
- 73: DEMULTIPLEXER
- 74: VIDEO DECODER
- 75: AUDIO DECODER
- 76: DISPLAY UNIT
- 77: SELECTION UNIT
- 78: DISPLAY UNIT
- 79: BROWSER
- 80: CONTROLLER
- 81: OPERATION UNIT
- 111 TO 113: STATION INFORMATION ACQUISITION UNIT
- 114: REGISTRATION UNIT
- 115: STORAGE UNIT
- 116: UPDATE UNIT
- 117: STATION SELECTION UNIT
- 118: TUNING CONTROL UNIT
- 201: CPU
- 202: ROM
- 203: RAM
- 204: BUS
- 205: INPUT/OUTPUT INTERFACE
- 206: INPUT UNIT
- 207: OUTPUT UNIT
- 208: STORAGE UNIT
- 209: COMMUNICATION UNIT
- 210: DRIVE
- 211: REMOVABLE MEDIUM

## Claims

1. A reception device for one segment broadcasting, comprising:
station information acquisition means for acquiring station information regarding a station, the station information at least including broadcasting area information which is information of a broadcasting area capable of receiving a broadcast wave from the station which transmits the broadcast wave of the one segment broadcasting at an arbitrary segment;
storage means for storing the station information;
station selection means for selecting a station of the one segment broadcasting which can be received at a predetermined position as a tunable station which can be tuned using the broadcasting area information; and
tuning control means for performing tuning control in which the one segment broadcasting of the tunable station is tuned.

2. The reception device according to claim 1, wherein the tuning control means displays information of the tunable station, and tunes the one segment broadcasting of a station selected by a user from the display of the information of the tunable station.

3. The reception device according to claim 2, wherein the station selection means selects a station of the one segment broadcasting which can be received in an area selected by a user as a tunable station using the broadcasting area information.

4. The reception device according to claim 2, wherein the tuning control means performs a reception check for checking whether or not one segment broadcasting by the tunable station can be received, and displays information of only the tunable station for which reception of the one segment broadcasting has been checked.

5. The reception device according to claim 1, wherein the tuning control means sequentially tunes the one segment broadcasting of the tunable station.

6. The reception device according to claim 1, wherein the station information further includes an effective period during which the station performs the one segment broadcasting, and
wherein the reception device further includes update means for deleting the station information of which the effective period has elapsed, from among pieces of the station information stored in the storage means and for updating the station information.

7. The reception device according to claim 1, wherein the broadcasting area information is information indicating a position of the station and information indicating a transmission output of the broadcast wave by the station.

8. The reception device according to claim 1, wherein the station information further includes a frequency of one segment broadcasting by the station corresponding to the station information, and
wherein the tuning control means tunes the one segment broadcasting using the frequency included in the station information.

9. A reception method for a reception device of one segment broadcasting, comprising the steps of:
acquiring station information regarding a station, the station information at least including broadcasting area information which is information of a broadcasting area capable of receiving a broadcast wave from the station which transmits the broadcast wave of the one segment broadcasting at an arbitrary segment;
storing the station information;
selecting a station of the one segment broadcasting which can be received at a predetermined position as a tunable station which can be tuned using the broadcasting area information; and
performing tuning control in which the one segment broadcasting of the tunable station is tuned.

10. A program for causing a computer to function as:
station information acquisition means for acquiring station information regarding a station, the station information at least including broadcasting area information which is information of a broadcasting area capable of receiving a broadcast wave from the station which transmits the broadcast wave of the one segment broadcasting at an arbitrary segment;
storage means for storing the station information;
station selection means for selecting a station of the one segment broadcasting which can be received at a predetermined position as a tunable station which can be tuned using the broadcasting area information; and
tuning control means for performing tuning control in which the one segment broadcasting of the tunable station is tuned.

11. A transmission device which is a station, comprising:
station information acquisition means for acquiring station information regarding a station, the station information at least including broadcasting area information which is information of a broadcasting area capable of receiving a broadcast wave from the station which transmits the broadcast wave of the one segment broadcasting at each of one or more arbitrary segments; and
transmission means for transmitting the station information of the station with a representative segment which is one segment of the one or more segments used for one segment broadcasting by the station.

12. The transmission device according to claim 11, wherein the transmission means also transmits the station information of other stations with the representative segment.

13. A transmission method of a transmission device, which is a station for transmitting a broadcast wave of one segment broadcasting at each of one or more arbitrary segments, comprising the steps of:
acquiring station information regarding the station, the station information at least including broadcasting area information which is information of a broadcasting area capable of receiving the broadcast wave from the station; and
transmitting the station information of the station with a representative segment which is one segment of the one or more segments used for one segment broadcasting by the station.

14. A program for causing a computer to function as a transmission device which is a station comprising:
station information acquisition means for acquiring station information regarding a station, the station information at least including broadcasting area information which is information of a broadcasting area capable of receiving a broadcast wave from the station which transmits the broadcast wave of the one segment broadcasting at each of one or more arbitrary segments; and
transmission means for transmitting the station information of the station with a representative segment which is one segment of the one or more segments used for one segment broadcasting by the station.
